# EUROPÄISCHE PATENTSCHRIFT

(11) **EP 2 569 192 B1**
(45) Veröffentlichungstag und Bekanntmachung des Hinweises auf die Patenterteilung: **18.10.2017**
(21) Anmeldenummer: 11719485.2
(22) Anmeldetag: 10.05.2011
(51) Int. Cl.: B60T 8/40, B60T 8/48

(54) **HYDRAULIKBAUGRUPPE FÜR EINE FAHRZEUG-BREMSANLAGE**
HYDRAULIC ASSEMBLY FOR A VEHICLE BRAKE SYSTEM
MODULE HYDRAULIQUE POUR SYSTÈME DE FREINAGE DE VÉHICULE

(30) Priorität: 10.05.2010 DE 102010020002
(43) Veröffentlichungstag der Anmeldung: 20.03.2013
(60) Teilanmeldung: 15002159.0
(73) Patentinhaber: Lucas Automotive GmbH, 56070 Koblenz (DE)
(72) Erfinder: GILLES, Leo, 56077 Koblenz (DE); KOETH, Boris, 56191 Weitersburg (DE)
(74) Vertreter: Röthinger, Rainer
(86) Internationale Anmeldenummer: PCT/EP2011/002320
(87) Internationale Veröffentlichungsnummer: WO 2011/141158

(56) Entgegenhaltungen:
- EP-A1- 0 280 740
- EP-A2- 0 265 623
- WO-A1-97/13672
- WO-A1-98/06612
- WO-A1-2004/067344
- WO-A1-2006/111393
- WO-A1-2006/136477
- DE-A1- 3 502 018
- DE-A1- 4 029 793
- DE-A1-102006 014 836
- US-A- 4 850 650

## Beschreibung

### Technisches Gebiet

Die vorliegende Offenbarung ist auf eine Hydraulikbaugruppe für eine mehrkreisige Fahrzeug-Bremsanlage gerichtet. Die Hydraulikbaugruppe umfasst einen Druckerzeuger zur fahrerunabhängigen Erzeugung eines Hydraulikdrucks in den Bremskreisen.

### Hintergrund

Herkömmliche Fahrzeug-Bremsanlagen können entweder von einem Fahrer oder aber fahrerunabhängig betätigt werden. Ein von dem Fahrer eingeleiteter Bremsvorgang wird auch als Betriebsbremsung bezeichnet. Im Rahmen einer vom Fahrer eingeleiteten Betriebsbremsung oder unabhängig hiervon kann ein Fahrsicherheitssystem fahrerunabhängig einen Bremsvorgang verursachen. In diesem Fall spricht man von einer Systembremsung, die eine Betriebsbremsung zeitlich überlagern oder zeitlich getrennt von einer Betriebsbremsung erfolgen kann. Bekannte Fahrsicherheitssysteme umfassen beispielsweise ein Antiblockiersystem (ABS), eine elektronische Stabilitätsregelung (ESC bzw. ESP) und ähnliche Systeme.

Bei herkömmlichen Fahrzeug-Bremsanlagen wird im Fall einer Betriebsbremsung der Hydraulikdruck in den Bremskreisen vom Fahrer selbst erzeugt. Zu diesem Zweck sind die Bremskreise hydraulisch mit einem Hauptzylinder gekoppelt, der vom Fahrer in bekannter Weise mittels eines Bremspedals betätigt wird.

In modernen Fahrzeug-Bremsanlagen kann die Hydraulikdruck-Erzeugung bei einer Betriebsbremsung auch mittels eines fahrerunabhängig betätigbaren Druckerzeugers erfolgen. Bei einem derartigen Druckerzeuger handelt es sich in der Regel um eine Hydraulikpumpe, die beispielsweise Teil einer elektrohydraulischen Fahrzeug-Bremsanlage oder einer regenerativen Fahrzeug-Bremsanlage ("Hybrid-Bremsanlage") ist.

Bei einer elektrohydraulischen Bremsanlage ist gemäß dem Prinzip des "Brake-by-Wire" der Hauptzylinder im Rahmen der Betriebsbremsung fluidisch von den Bremskreisen abgekoppelt. Die Hydraulik-Erzeugung erfolgt hier mittels der Hydraulikpumpe, die in Abhängigkeit eines Betätigungszustands des Bremspedals angesteuert wird. Bei einer regenerativen Fahrzeug-Bremsanlage ist im Rahmen einer Betriebsbremsung der Hauptzylinder ebenfalls hydraulisch von den Bremskreisen abgekoppelt. Das Abbremsen des Fahrzeugs erfolgt in diesem Fall mittels eines Generators der eine Fahrzeugbatterie auflädt. Sofern der Fahrer eine höhere Fahrzeugverzögerung anfordert, als der Generator liefern kann, wird von der Hydraulikpumpe ein ergänzender Hydraulikdruck in den Bremskreisen erzeugt. Dieser Vorgang wird auch als "Blending" bezeichnet.

Aus der DE 10 2007 047 208 A1 ist eine zweikreisige elektrohydraulische Bremsanlage bekannt. Die Bremsanlage umfasst zwei elektromotorisch betriebene Druckerzeuger, die in Gestalt einer zweikreisigen Fluidförderpumpe realisiert sind. Mittels der zweikreisigen Fluidförderpumpe kann in jedem der beiden Bremskreise ein individueller Hydraulikdruck erzeugt werden.

Aus der DE 10 2006 014 836 A1 ist eine zwei-kreisige elektrohydraulische Bremsanlage mit einer Hydraulikpumpe und einem damit fluidisch verbunden Druckspeicher bekannt. Ein Druckaufbau an den Radbremsen kann im "Brake-by-Wire" Betrieb über den Druckspeicher erfolgen, wobei hierfür für jeden Bremskreis ein vorgesehenes Proportionalventil in eine geöffnete Ventilstellung geschaltete wird. Die beiden Proportionalventile sind jeweils in einer mit dem Druckspeicher gekoppelten Druckleitung angeordnet.

Aus der DE 40 29 793 A1, WO 2006/136477 A1 und der WO 2004/067344 A1 ist ferner eine zwei-kreisige Bremsanlage mit einem einzigen gemeinsamen Druckerzeuger zum Aufbau eines zentralen Hydraulikdruckes an den Radbremsen bekannt. Druckleitungen beider Bremskreise münden hierfür in einem gemeinsamen Ausstoßanschluss des Druckerzeugers, wobei in den beiden Druckleitungen jeweils eine Ventilanordnung aus in Serie geschalteten Ventilen zum Halten eines aufgebauten Druckes und zum fluidischen Entkoppeln der beiden Bremskreise vorgesehen sein kann.

### Abriss

Es ist eine Fahrzeug-Bremsanlage gewünscht, die bei einer vom Fahrer eingeleiteten Betriebsbremsung in effizienter Weise eine fahrerunabhängige Erzeugung eines Hydraulikdrucks in den Bremskreisen gestattet. Auch soll eine Hydraulikbaugruppe für eine derartige Fahrzeug-Bremsanlage angegeben werden.

Im Rahmen der vorliegenden Offenbarung wird eine Lösung gemäß Anspruch 1 betreffend eine Hydraulikbaugruppe für eine Fahrzeug-Bremsanlage mit wenigstens zwei Bremskreisen und mit den Bremskreisen zugeordneten Radbremsen bereitgestellt. Die Fahrzeug-Bremsanlage umfasst einen Druckerzeuger zur fahrerunabhängigen Erzeugung eines zentralen Hydraulikdrucks für die Bremskreise zumindest bei einer Betriebsbremsung. Ferner umfasst die Hydraulikbaugruppe wenigstens eine Druckeinstelleinrichtung zur bremskreisindividuellen Einstellung des vom Druckerzeuger fahrerunabhängig erzeugten zentralen Hydraulikdrucks, wobei die Druckeinstelleinrichtung je Bremskreis eine erste Ventileinrichtung umfasst mit wenigstens einem Einstellventil, das zumindest zwischen einer geöffneten und einer geschlossenen Ventileinstellung einstellbar ist, um einen Hydraulikdruck bremskreisindividuell einzustellen, und mit einem dem Einstellventil derart parallel geschalteten federkraftbeaufschlagten ersten Rückschlagventil, dass in der geschlossenen Ventilstellung ein Überströmen des Einstellventils in Richtung der Radbremsen ermöglicht ist, um den aufgrund des geschlossenen Einstellventils gehaltenen Hydraulikdruck weiter zu erhöhen.

Der Druckerzeuger kann dazu eingerichtet sein, den zentralen Hydraulikdruck auch bei einer Systembremsung bereitzustellen. Die Systembremsung kann eine Betriebsbremsung zeitlich überlagern oder zeitlich getrennt von einer Betriebsbremsung stattfinden. Unter einer Systembremsung wird hier allgemein ein fahrerunabhängig erfolgender Bremseingriff durch ein Fahrsicherheitssystem verstanden. Der automatische Bremseingriff kann beispielsweise zu einem Hydraulikdruckaufbau oder einem Erhöhen, Erniedrigen oder Beibehalten eines vorherrschenden Hydraulikdrucks führen.

Der Druckerzeuger erzeugt in zentraler Weise einen gemeinsamen Hydraulikdruck für sämtliche Bremskreise, der dann mittels der Druckeinstelleinrichtung erforderlichenfalls bremskreisindividuell eingestellt werden kann. Auf diese Weise kann trotz zentraler Hydraulikdruck-Erzeugung zwischen den Bremskreisen eine Druckdifferenz eingestellt werden. Gemäß einer Variante erfolgt die Hydraulikdruck-Einstellung über einen kontinuierlichen Druckbereich hinweg. Gemäß einer alternativen Variante bezieht sich die Einstellung auf eine diskrete oder gar binäre ("ein/aus") Hydraulikdruckversorgung eines individuellen Bremskreises.

Die Druckeinstelleinrichtung kann eine oder mehrere Ventileinrichtungen umfassen. Jede Ventileinrichtung kann wiederum eine oder mehrere Ventilgruppen aufweisen, und jede Ventilgruppe kann ein oder mehrere Ventile beinhalten. So wäre es beispielsweise denkbar, dass jede Ventileinrichtung der Druckeinstelleinrichtung pro Bremskreis eine Ventilgruppe mit zumindest einem Ventil umfasst.

Alternativ oder zusätzlich zu der wenigstens einen Ventileinrichtung kann die Druckeinstelleinrichtung auch Steuerelektronik wie z.B. ein Steuergerät für den Druckerzeuger umfassen. Auch kann jeder Ventileinrichtung eine Steuerelektronik zur Betätigung der Ventileinrichtung zugeordnet sein. In einer Realisierung dieses Konzepts umfasst die Druckeinstelleinrichtung eine erste Ventileinrichtung, die elektrisch betätigbar ist, um einen dem Betätigungszustand entsprechenden Hydraulikdruck einzustellen (z.B. einzuregeln). Die erste Ventileinrichtung kann mittels Pulsweitenmodulation elektrisch betätigbar sein. In diesem Fall ist der Betätigungszustand der ersten Ventileinrichtung über die Pulsweite einstellbar.

Eine Implementierung der Hydraulikbaugruppe sieht vor, dass die erste Ventileinrichtung wenigstens ein Einstellventil, das (zumindest) zwischen einer geöffneten Ventilstellung und einer geschlossenen Ventilstellung einstellbar ist, umfasst. Ein solches Einstellventil kann digital, diskret oder kontinuierlich einstellbar sein und pro Bremskreis vorgesehen werden.

Die erste Ventileinrichtung umfasst das dem bzw. jedem Einstellventil parallel geschaltete erste Rückschlagventil. Das erste Rückschlagventil ist hierbei dem Einstellventil derart parallel geschaltet, dass bei geschlossenem Einstellventil ein Überströmen des Einstellventils in Richtung der Radbremsen ermöglicht ist. Das Rückschlagventil gestattet so selbst bei geschlossenem Einstellventil einen weiteren Hydraulikdruckaufbau in wenigstens einem der Bremskreise mittels des Druckerzeugers.

Der Druckerzeuger kann einen Ansauganschluss für Hydraulkfluid sowie einen Ausstoßanschluss für Hydraulikfluid umfassen. Diese Anschlüsse können separat voneinander vorgesehen werden. Alternativ hierzu können die Anschlüsse auch mittels eines einzigen gemeinsamen Anschlusses realisiert werden, über den sowohl das Ansaugen als auch das Ausstoßen des Hydraulikfluids erfolgt. Im zuletzt genannten Fall sind die Anschlüsse in Gestalt des gemeinsamen Anschlusses miteinander fluidisch gekoppelt. Im zuerst genannten Fall kann eine fluidische Kopplung der beiden Anschlüsse innerhalb des Druckerzeugers erfolgen. Alternativ oder zusätzlich hierzu können der Ansauganschluss und der Ausstoßanschluss auch außerhalb des Druckerzeugers miteinander fluidisch gekoppelt sein.

In einer Ansaugleitung, die in den Ansauganschluss mündet, kann eine zweite Ventileinrichtung vorgesehen werden. Die zweite Ventileinrichtung kann beispielsweise ein zweites Rückschlagventil umfassen, welches bei einem Ansaugen (z.B. bei einem Ansaughub) des Druckerzeugs öffnet und bei einem Ausstoßen (z.B. bei einem Ausstoßhub) des Druckerzeugers schließt.

Der Ansauganschluss (bzw. eine zugeordnete Ansaugleitung) kann mit einem drucklosen Hydraulikfluid-Reservoir gekoppelt oder koppelbar sein. Aus diesem Reservoir kann der Druckerzeuger druckloses Hydraulikfluid ansaugen, um es anschließend in einen oder mehrere der Bremskreise zu fördern. Diese Aspekte bilden jedoch lediglich ein die Erfindung verdeutlichendes allgemeines Beispiel.

Der Druckerzeuger kann eine Hydraulikkammer zur Aufnahme von Hydraulikfluid umfassen, so dass die Bremskreise aus der Hydraulikkammer mit Hydraulikfluid versorgbar sind. Sowohl der Ansauganschluss als auch der Ausstoßanschluss (bzw. ein entsprechender kombinierter Anschluss) kann in die Hydraulikkammer münden.

Bei dem Druckerzeuger kann es sich um eine herkömmliche Mehrkolbenpumpe handeln, die einen gewünschten Hydraulikdruck mittels typischerweise einer Mehrzahl von Kolbenhüben erzeugt. Gemäß einer alternativen Ausgestaltung umfasst der Druckerzeuger einen innerhalb der Hydraulikkammer beweglichen Plunger-Kolben. Vorteilhafterweise ist für sämtliche Bremskreise eine einzige Hydraulikkammer mit einem einzigen Plunger-Kolben vorgesehen. Bei dem mit einem Plunger-Kolben ausgestatteten Druckerzeuger kann im Fall einer ausreichend groß dimensionierten Hydraulikkammer der Aufbau des gewünschten Hydraulikdrucks mittels einer einzigen Ausstoßhub-Bewegung erfolgen.

Der Druckerzeuger kann einen Elektromotor zur Betätigung, der Kolbenpumpe bzw. des Plunger-Kolbens umfassen. Zwischen dem Elektromotor und dem Druckerzeuger kann erforderlichenfalls ein Getriebe (typischerweise ein Untersetzungsgetriebe) vorgesehen werden. Bei dem Getriebe kann es sich um ein Riemengetriebe, ein Zahnradgetriebe oder eine Kombination dieser beiden Getriebetypen handeln.

Der Elektromotor kann koaxial oder axial versetzt zum Plunger-Kolben angeordnet werden. Gemäß einer Realisierung ist der Elektromotor axial versetzt aber achsparallel zum Plunger-Kolben vorgesehen.

Die Druckeinstelleinrichtung kann ferner ein erstes Steuergerät für den Elektromotor umfassen. Das erste Steuergerät kann dazu eingerichtet sein, den Elektromotor in Abhängigkeit von dem zu erzeugenden Hydraulikdruck mit Ansteuersignalen zu versorgen. Für eine geregelte Ansteuerung des Elektromotors kann ferner ein Drucksensor vorgesehen sein (z.B. in der Hydraulikkammer oder in den Bremskreisen), dessen Ausgangssignal von dem ersten Steuergerät zum Zweck eines Istwert/Sollwert-Vergleichs ausgewertet wird.

Die Hydraulikbaugruppe umfasst eine Umschalteinrichtung. Die Umschalteinrichtung ist dazu vorgesehen, die Radbremsen wahlweise mit dem fahrerunabhängig erzeugten Hydraulikdruck oder mit einem vom Fahrer erzeugten Hydraulikdruck zu versorgen. Die Umschalteinrichtung kann elektrisch betätigbar sein, wobei sie in einem unbetätigten Zustand die Radbremsen mit einem fahrerbetätigbaren Hauptzylinder koppelt und in einem betätigen Zustand die Radbremsen mit dem Druckerzeuger koppelt. Die Umschalteinrichtung kann daher nach dem Prinzip des "Push-Through" konfiguriert werden, um beispielsweise bei Ausfall des Druckerzeugers auf jeden Fall noch eine fahrerinduzierte Hydraulikdruck-Erzeugung zu ermöglichen.

Hinsichtlich der Umschalteinrichtung sind verschiedene Realisierungen möglich. So umfasst die Umschalteinrichtung erfindungsgemäß ein 3/2-Wege-Ventil. Gemäß weiteren allgemeinen Beispielen wären aber auch andere Ventilkonfigurationen denkbar.

Die Hydraulikbaugruppe kann einen modularen Aufbau aus zwei oder mehreren eigenständig handhabbaren Unterbaugruppen besitzen. Von einzelnen Unterbaugruppen können mehrere technisch unterschiedlichen Versionen existieren. Auf diese Weise kann die Hydraulikbaugruppe nach dem Baukastenprinzip für unterschiedliche Fahrzeugtypen unterschiedlich konfiguriert werden.

So können beispielsweise die Umschalteinrichtung, die Druckeinstelleinrichtung und der Druckerzeuger eine erste eigenständig handhabbare Unterbaugruppe bilden (wobei die Umschalteinrichtung nicht notwendigerweise Teil der ersten Unterbaugruppe sein muss). Von der ersten Unterbaugruppe können mehrere verschiedene Typen existieren, die sich beispielsweise hinsichtlich der Hydraulikfluid-Förderkapazität des jeweiligen Druckerzeugers und/oder hinsichtlich der Konfiguration der Druckeinstelleinrichtung unterscheiden. Auch der Hauptzylinder kann Teil der ersten Unterbaugruppe oder einer weiteren Unterbaugruppe sein, was jedoch nicht Gegenstand der beanspruchten Erfindung ist.

Zwischen der Druckeinstelleinrichtung und den Radbremsen kann eine dritte Ventileinrichtung vorgesehen werden, um fahrerunabhängig Bremseingriffe an den Radbremsen durchführen zu können. Die dritte Ventileinrichtung kann beispielsweise Teil eines Fahrsicherheitssystems (z.B. eines ABS und/oder ESC-Systems) sein.

Gemäß einer ersten Variante ist die dritte Ventileinrichtung Teil der ersten Unterbaugruppe. Gemäß einer anderen Variante, die lediglich ein die Erfindung verdeutlichendes allgemeines Beispiel darstellt, ist die dritte Ventileinrichtung Teil einer eigenständig handhabbaren zweiten Unterbaugruppe. Auch von der zweiten Unterbaugruppe können verschiedene Typen existieren, die sich beispielsweise hinsichtlich der jeweiligen Ventilkonfiguration unterscheiden. So kann gemäß einer ersten Konfiguration die dritte Ventileinrichtung ausschließlich nicht-regelbare Sperrventile umfassen,
die lediglich binär ("ein/aus") schaltbar sind. Gemäß einer alternativen Konfiguration kann die dritte Ventileinrichtung (zusätzlich oder alternativ zu nicht-regelbaren Sperrventilen) regelbare Ventile umfassen.

Bei einer anderweitigen Ausgestaltung der zwischen der Druckeinstelleinrichtung und den Radbremsen angeordneten dritten Ventileinrichtung kann diese zur radindividuellen oder radgruppenindividuellen (z.B. für eine Gruppe von zwei Rädern) Bremsdruckeinstellung herangezogen werden. Die radindividuelle oder radgruppenindividuelle Bremsdruckseinstellung kann im Multiplexbetrieb erfolgen (z.B. durch einzelnes oder gruppenweises Öffnen und Schließen von der dritten Ventileinrichtung umfasster Ventile).

Gemäß einer Implementierung der dritten Ventileinrichtung umfasst diese pro Radbremse genau ein Ventil. Das Ventil kann ein 2/2-Wege-Ventil sein. Ferner kann für die dritte Ventileinrichtung eine Steuerelektronik vorgesehen sein, um die einzelnen Ventile im Multiplexbetrieb anzusteuern.

Unabhängig von der konkreten Ausgestaltung der dritten Ventileinrichtung kann der Druckerzeuger mit wenigstens einer der dritten Ventileinrichtung zugeordneten Hydraulikfluid-Rücklaufleitung gekoppelt oder koppelbar sein. Außerdem kann der Druckerzeuger eine Fluidaufnahmefunktionalität für durch die Hydraulikfluid-Rücklaufleitung (von den Radbremsen) zurück strömendes Hydraulikfluid aufweisen. Die zweite Ventilanordnung kann ganz oder vollständig in der Rücklaufleitung angeordnet sein. Insbesondere kann ein Rückschlagventil der zweiten Ventilanordnung in der Rücklaufleitung angebracht werden. Auf diese Weise lässt sich beispielsweise verhindern, dass von dem Druckerzeuger gefördertes Hydraulikfluid über die Rücklaufleitung zu den Radbremsen gelangt.

Die Hydraulikfluid-Rücklaufleitung kann von einem drucklosen Hydraulikfluid-Reservoir abgetrennt (und mit diesem auch nicht verbindbar) sein. Das Reservoir kann ansosten beispielsweise dazu dienen, einen Hauptzylinder der Fahrzeug-Bremsanlage mit Hydraulikfluid zu versorgen.

Ferner kann wenigstens ein Druckspeicher mit der Hydraulikfluid-Rücklaufleitung gekoppelt oder koppelbar sein. Der wenigstens eine Druckspeicher kann dazu ausgebildet sein, durch die Hydraulikfluid-Rücklaufleitung zurück strömendes Hydraulikfluid zu speichern. Der wenigstens eine Druckspeicher kann als Niederdruckspeicher (Low Pressure Accumulator oder LPA) ausgebildet sein.

Gemäß einer Variante ist der wenigstens eine Druckspeicher in der Hydraulikfluid-Rücklaufleitung zwischen dem Druckerzeuger und der dritten Ventileinrichtung vorgesehen. So kann der wenigstens eine Druckspeicher etwa zwischen der zweiten Ventileinrichtung und der dritten Ventileinrichtung in die Hydraulikfluid-Rücklaufleitung eingebracht werden. Bei einer mehrkreisigen Fahrzeug-Bremsanlage kann pro Bremskreis ein separater Druckspeicher vorhanden sein.

Zur fahrerunabhängigen Durchführung von Bremseingriffen an den Radbremsen kann ein zweites Steuergerät vorgesehen werden. Das zweite Steuergerät kann Teil des Fahrsicherheitssystem sein und dazu ausgelegt werden, den Druckerzeuger anzusteuern, um fahrerunabängig in einer sicherheitskritischen Situation einen Hydraulikdruck aufzubauen. Das zweite Steuergerät kann darüber hinaus dazu ausgelegt sein, durch geeignete Ansteuerung der dritten Ventileinrichtung in der sicherheitskritischen Situation Einfluss auf den vorherrschenden Hydraulikdruck zu nehmen.

Gemäß einer allgemeinen Implementierung, die lediglich zur Verdeutlichung der Erfindung dient, ist das erste Steuergerät Teil der ersten Unterbaugruppe, während das zweite Steuergerät Teil der zweiten Unterbaugruppe ist. Es wäre jedoch auch denkbar, die Funktionalitäten des ersten Steuergeräts und des zweiten Steuergeräts in einem gemeinsamen Steuergerät zu implementieren. Das gemeinsame Steuergerät kann dann (wie die dritte Ventileinrichtung) Teil der ersten Unterbaugruppe sein.

Für eine regenerative Fahrzeug-Bremsanlage, die lediglich ein allgemeines Beispiel darstellt, kann ferner ein drittes Steuergerät für den regenerativen Bremsbetrieb vorgesehen werden. Das dritte Steuergerät ist dazu ausgelegt, den Druckerzeuger im regenerativen Bremsbetrieb anzusteuern, um fahrerunabhängig einen hydraulischen Bremsdruck aufzubauen. Der Aufbau des hydraulischen Bremsdrucks an den Radbremsen kann während eines Generatorbetriebs erfolgen ("Blending").

Bei einer lediglich zum Zweck der Verdeutlichung erläuterten regenerativen Fahrzeug-Bremsanlage kann die Hydraulikbaugruppe ferner eine Pedalrückwirkungssimulationseinheit umfassen, die im regenerativen Bremsbetrieb durch einen vom Fahrer (beispielsweise im Hauptzylinder) erzeugten Hydraulikdruck betätigbar ist. Die Pedalrückwirkungssimulationseinheit kann Teil der ersten Unterbaugruppe sein. Alternativ hierzu kann die Pedalrückwirkungssimulationseinheit, ggf. zusammen mit dem Hauptzylinder, eine eigenständig handhabbare dritte Unterbaugruppe bilden. Wiederum können verschiedene Typen der dritten Unterbaugruppe bereitgestellt werden, die sich beispielsweise hinsichtlich der volumenmäßigen Auslegung des Hauptzylinders und/oder der Pedalrückwirkungssimulationseinheit unterscheiden.

Die hier beschriebene Hydraulikbaugruppe kann Teil einer elektrohydraulischen oder, gemäß einem lediglich allgemeinen Beispiel, einer regenerativen Fahrzeug-Bremsanlage sein. Die entsprechende Bremsanlage kann ferner geeignete Einrichtungen für den "Brake-By-Wire"-Betrieb umfassen. Derartige Einrichtungen können ein Bremspedal mit zugeordnetem Pedalsensor beinhalten sowie eine Steuerelektronik, die in Abhängigkeit eines Ausgangssignals des Pedalsensors den Druckerzeuger ansteuert. Die jeweilige Bremsanlage kann außerdem die Bremskreise mit zugeordneten Bremsleitungen und Radbremsen umfassen.

Im lediglich allgemeinen Fall einer regenerativen Fahrzeug-Bremsanlage kann ferner neben der Pedalrückwirkungssimulationseinheit ein Generator vorgesehen werden. Der Generator dient dem Aufladen einer Fahrzeugbatterie im Rahmen des Generatorbetriebs bei einer Betriebsbremsung.

### Kurze Beschreibung der Zeichnungen

Weitere Einzelheiten, Merkmale und Vorteile der hier beschriebenen Hydraulikbaugruppen und Fahrzeug-Bremsanlagen ergeben sich aus der nachfolgenden Beschreibungen exemplarischer Ausführungsbeispiele, die unter Bezugnahme auf die Zeichnungen erläutert werden. In den Zeichnungen zeigt:
- Fig. 1: ein erstes erfindungsgemäßes Ausführungsbeispiel einer Fahrzeug-Bremsanlage;
- Fign. 2A-2C: allgemeine Beispiele einer Fahrzeugbremsanlage;
- Fig. 3: ein erstes Ausführungsbeispiel für einen modularen Aufbau der Fahrzeug-Bremsanlage gemäß Fig. 1;

- Fig. 4: ein zweites Ausführungsbeispiel für einen modularen Aufbau der Fahrzeug-Bremsanlage gemäß Fig. 1;
- Fig. 5: ein drittes Ausführungsbeispiel für einen modularen Aufbau der Fahrzeug-Bremsanlage gemäß Fig. 1;
- Fig. 6: ein viertes Ausführungsbeispiel für einen modularen Aufbau der Fahrzeug-Bremsanlage gemäß Fig. 1;
- Fig. 7: ein Ausführungsbeispiel einer Unterbaugruppe in einer Explosionsdarstellung;
- Fig. 8: eine perspektivische Darstellung der Unterbaugruppe gemäß Fig. 7;
- Fig. 9: eine Schnittansicht der Unterbaugruppe gemäß den Fign. 7 und 8;
- Fig. 10: eine perspektivische Darstellung einer um einen Hauptzylinder sowie eine Pedalrückwirkungssimulationseinheit ergänzten Unterbaugruppe gemäß den Fign. 7 und 8;
- Fig. 11: ein weiteres Ausführungsbeispiel einer Fahrzeug-Bremsanlage;
- Fign. 12-14: zusätzliche Ausführungsbeispiele einer Fahrzeug-Bremsanlage auf der Grundlage des Ausführungsbeispiels gemäß Fig. 11 mit "geschlossenem" Fluidrücklauf; und
- Fig. 15: ein weiteres Ausführungsbeispiel einer Fahrzeug-Bremsanlage für den Multiplex-Betrieb.

### Detaillierte Beschreibung

Im Folgenden werden unter Bezugnahme auf die Zeichnungen verschiedene Ausführungsbeispiele und zur Verdeutlichung hilfreiche allgemeine Beispiele einer Fahrzeug-Bremsanlage sowie einer hierfür vorgesehenen Hydraulikbaugruppe erläutert. In den Zeichnungen sind übereinstimmende Elemente mit denselben Bezugszeichen versehen.

Obwohl die Ausführungsbeispiele im Zusammenhang mit einer beispielhaften Kraftfahrzeug-Bremsanlage und einem beispielhaften Druckerzeuger erläutert werden, ist darauf hinzuweisen, dass die Erfindung nicht auf die hier beschriebenen Realisierungen beschränkt ist. So kann der Druckerzeuger nicht nur nach dem hier vorgestellten Plunger-Prinzip arbeiten, sondern auch in Gestalt einer zyklisch arbeitenden Mehrkolbenpumpe, der wahlweise ein Druckspeicher zugeordnet sein kann, ausgebildet sein. Ferner lässt sich das hier beschriebene Konzept auch auf Bremsanlagen mit mehr als zwei Bremskreisen, mit anderer Bremskreisaufteilung (z.B. diagonaler Aufteilung), usw. implementieren.

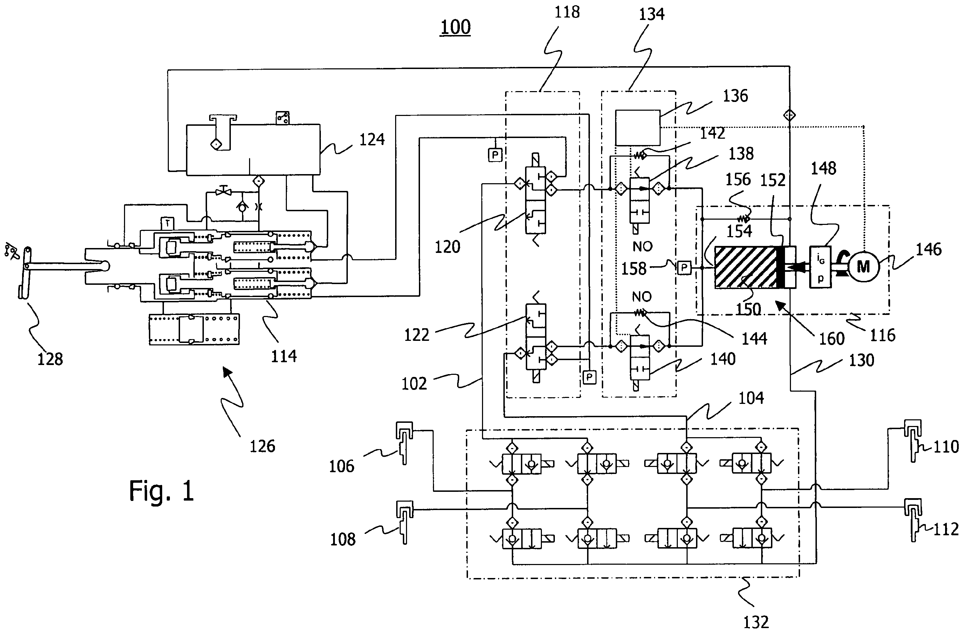

Fig. 1 zeigt ein erstes Ausführungsbeispiel einer Fahrzeug-Bremsanlage 100. Bei der Fahrzeug-Bremsanlage 100 handelt es sich um eine elektrohydraulische Fahrzeug-Bremsanlage oder eine regenerative Fahrzeug-Bremsanlage (oder eine Kombination hiervon).

Die Fahrzeug-Bremsanlage 100 gemäß Fig. 1 umfasst eine Vielzahl von Komponenten, die je nach Bedarf als eine oder mehrere eigenständig handhabbare Hydraulikbaugruppen konfigurierbar sind. Unterschiedliche Hydraulikbaugruppen können an voneinander beabstandeten Bereichen eines Kraftfahrzeugs verbaut werden.

Im Folgenden werden zunächst die einzelnen Hydraulik-Komponenten sowie deren Funktionen näher erläutert. Im Anschluss daran werden mögliche Konfigurationen der Hydraulikkomponenten im Zusammenhang mit eigenständig handhabbaren Unterbaugruppen vorgestellt.

Wie in Fig. 1 dargestellt, handelt es sich bei der Fahrzeug-Bremsanlage 100 um eine zweikreisige Bremsanlage. Ein erster Bremskreis 102 ist dazu ausgebildet, zwei Hinterradbremsen 106, 108 mit Hydraulikfluid zu versorgen. Einem zweiten Bremskreis 104 kommt die selbe Aufgabe im Hinblick auf zwei Vorderradbremsen 110, 112 zu.

Den beiden Bremskreisen 102, 104 kann wahlweise Hydraulikfluid von einem fahrerbetätigbaren Hauptzylinder 114 oder einem elektromotorisch betätigbaren Druckerzeuger 116 zugeführt werden. Mittels des Druckerzeugers 116 lässt sich somit fahrerunabhängig ein Hydraulikdruck in den beiden Bremskreisen 102, 104 erzeugen.

Eine Umschalteinrichtung 118 ist funktional zwischen den Radbremsen 106, 108, 110, 112 einerseits und dem Hauptzylinder 114 sowie dem Druckerzeuger 116 andererseits vorgesehen. Die Umschalteinrichtung 118 umfasst im Ausführungsbeispiel gemäß Fig. 1 pro Bremskreis 102, 104 je ein elektrisch betätigbares 3/2-Wege-Ventil 120, 122.

In elektrisch unbetätigtem Zustand koppeln die Ventile 120, 122 die Radbremsen 106, 108, 110, 112 gemäß dem "Push-Through"-Prinzip mit dem Hauptzylinder. Auf diese Weise kann bei einem Ausfall der Fahrzeugelektrik oder der Fahrzeug-Elektronik ein Abbremsen des Fahrzeugs über einen im Hauptzylinder 114 vom Fahrer erzeugten Hydraulikdruck gewährleistet werden. Im elektrisch betätigten Zustand gemäß Fig. 1 koppeln die beiden Ventile 120, 122 die Radbremsen 106, 108, 110, 112 mit dem Druckerzeuger 116. In diesem Fall kann mittels des Druckerzeugers 116 ein Hydraulikdruckaufbau in den beiden Bremskreise 102, 104 sowohl bei einer von einem Fahrer eingeleiteten Betriebsbremsung als auch bei einer Systembremsung erfolgen. Mögliche Ansteuer-Szenarien für den Druckerzeuger 116 im Fall einer elektrohydraulischen und/oder regenerativen Betriebsbremsung werden später näher erläutert.

Der Hauptzylinder 114 wird über ein druckloses Reservoir 124 mit Hydraulikfluid versorgt. In elektrisch betätigtem Zustand der 3/2-Wege-Ventile 120, 122 - wenn also der Hauptzylinder 114 von den Radbremsen 106, 108, 110, 112 abgekoppelt ist - wird das aus dem drucklosen Reservoir 124 entnommene Hydraulikfluid vom Hauptzylinder 114 in ein unter Druck stehendes Reservoir 126 gefördert. Bei dem unter Druck stehenden Reservoir 126 handelt es sich um einen Pedalrückwirkungssimulator, welcher aufgrund der Abkopplung des Hauptzylinders 114 von den Radbremsen 106, 108, 110, 112 dem Fahrer das gewohnte Rückwirkungsverhalten für ein den Hauptzylinder 114 betätigendes Bremspedals 128 bereitstellt. Der Hauptzylinder 114 und die Pedalrückwirkungssimulationseinheit 126 können beispielsweise den aus der DE 199 50 862 A1 bekannten Aufbau aufweisen. Die Pedalrückwirkungssimulationseinheit 126 basiert hier auf dem Prinzip des mechanischen "Cut-Off", gemäß dem in Folge des Verschiebens eines Kolbens des Hauptzylinders 114 die Pedalrückwirkungssimulationsfunktion zu- und abgeschaltet wird.

Wie in Fig. 1 erkennbar, mündet eine Fluidleitung 130 (kombinierte Rücklauf/AnsaugLeitung) in das drucklose Hydraulikfluid-Reservoir 124. Über die Leitung 130 kann Hydraulikfluid aus den Radbremsen 106, 108, 110, 112 in das Reservoir 124 zurückfließen. Des Weiteren kann über diese Leitung 130 der Druckerzeuger 116 Hydraulikfluid ansaugen. Das angesaugte Hydraulikfluid wird im Anschluss an den Ansaugvorgang in die Bremskreise 102, 104 eingespeist, um im Rahmen einer Betriebsbremsung oder Systembremsung einen Hydraulikdruck in den Radbremsen 106, 108, 110, 112 aufzubauen.

Zwischen der Umschalteinrichtung 118 und den Radbremsen 106, 108, 110, 112 ist eine Ventileinrichtung 132 zur fahrerunabhängigen Durchführung von Bremseingriffen an den Radbremsen 106, 108, 110, 112 vorgesehen. Die Ventileinrichtung 132 umfasst pro Radbremse zwei (vorzugsweise nicht-regelbare) Sperrventile, die als 2/2-Wege-Ventile ausgelegt sind. Mittels dieser Ventile lassen sich in bekannter Weise Druckaufbau-, Druckhalte- und Druckabbauphasen im Rahmen von Systembremsungen, also sicherheitsrelevanter fahrerunabhängiger Bremseingriffe, durchführen. Derartige Bremseingriffe können beispielsweise ABS-Regeleingriffe oder ESC-Regeleingriffe umfassen. Da derartige Regeleingriffe an sich bekannt sind, werden diese hier nicht ausführlicher erläutert.

Die Bremsanlage 100 gemäß Fig. 1 umfasst ferner eine Druckeinstelleinrichtung 134 zur bremskreisindividuellen Einstellung des vom Druckerzeuger 116 zentral erzeugten Hydraulikdrucks. Die Druckeinstelleinrichtung 134 umfasst im Ausführungsbeispiel gemäß Fig. 1 eine Steuerelektronik 136 sowie eine Ventileinrichtung mit zwei (vorzugsweise nicht-regelbaren) Sperrventilen 138, 140. Wie in Fig. 1 dargestellt, handelt es sich bei den Ventilen 138, 140 um elektrisch betätigbare Ventile, die in elektrisch unbetätigtem Zustand geöffnet sind ("Normally Open" oder "NO"). Die Steuerelektronik 136 ist primär für den Druckerzeuger 116 vorgesehen und ermöglicht darüber hinaus eine optionale Ansteuerung der Ventile 138, 140.

Wie in Fig. 1 dargestellt, ist jedem der beiden Ventile 138, 140 ein federkraftbeaufschlagtes Rückschlagventil 142, 144 parallel geschaltet. Die Parallelschaltung der Rückschlagventile 142, 144 ermöglicht bei geschlossener Ventilstellung der Ventile 138, 140 ein Überströmen der geschlossenen Ventile 138, 140 in Richtung der Radbremsen 106, 108, 110, 112. Auf diese Weise lässt sich auch in der geschlossenen Ventilstellung dieser Ventile 138, 140 mittels des Druckerzeugers 116 ein Druck an den Radbremsen 106, 108, 110, 112 aufbauen bzw. erhöhen, sofern der vom Druckerzeuger 116 erzeugte Druck einen vorgegebenen Schwellenwert übersteigt. Dieser Schwellenwert ist durch die Federkraft, mit welchem die Rückschlagventile 142, 144 beaufschlagt sind, festgelegt.

Ein Schließen der beiden Ventile 138, 140 ist beispielsweise dann erforderlich, wenn im Rahmen eines fahrerunabhängig durchgeführten Bremseingriffs (Systembremsung) ein Nachsaugen von Hydraulikfluid seitens des Druckerzeugers 116 aus dem drucklosen Reservoir 124 erforderlich wird. Bei dem Bremseingriff kann es sich um einen ABS- oder ESC-Regelvorgang handeln.

Nachfolgend wird der Aufbau und die Funktionsweise des Druckerzeugers 116 erläutert. Aufgabe des Druckerzeugers 116 ist es, einen zentralen (also einzigen bzw. einheitlichen) Hydraulikdruck für beide Bremskreise 102, 104 zur erzeugen. Die bremskreisindividuelle Einstellung des Hydraulikdrucks erfolgt dann wie oben beschrieben mittels der dem Druckerzeuger 116 nachgeschalteten Druckeinstelleinrichtung 134.

Der Druckerzeuger 116 umfasst einen mittels der Steuerelektronik 136 ansteuerbaren Elektromotor 146, ein dem Elektromotor 146 abtriebsseitig nachgelagertes Getriebe 148 sowie ein dem Getriebe 148 abtriebsseitig nachgelagertes Zylinder/Kolben-System 160. Das Zylinder/Kolben-System 160 umfasst eine einzige Hydraulikkammer 150, innerhalb der ein Plunger-Kolben 152 beweglich geführt ist. Die Position des Plunger-Kolbens 152 innerhalb der Hydraulikkammer 150 - und damit der Hydraulikdruck innerhalb der Hydraulikkammer 150 - ist mittels des Elektromotors 146 einstellbar.

Wie in Fig. 1 gezeigt, besitzt die Hydraulikkammer 150 einen Anschluss 154, über den Hydraulikfluid in die Kammer 150 angesaugt sowie aus der Kammer 150 heraus ausgestoßen werden kann. Das Ansaugen bzw. Ausstoßen von Hydraulikfluid erfolgt durch eine Hubbewegung des Plunger-Kolbens 152.

Der Anschluss 154 ist fluidisch mit der Eingangsseite jedes der beiden Ventile 138, 140 der Druckeinstelleinrichtung 134 gekoppelt. Der Anschluss 154 ist ferner über ein federkraftbeaufschlagtes Rückschlagventil 156 fluidisch mit der Rücklauf-Leitung 130 gekoppelt. Das Rückschlagventil 156 ist derart angeordnet, dass es bei einem Ansaughub des Plunger-Kolbens öffnet und bei einem Ausstoßhub schließt. Auf diese Weise lässt sich Hydraulikfluid aus dem drucklosen Reservoir 124 in die Hydraulikkammer 150 fördern, ohne dass aus der Hydraulikkammer 150 ausgestoßenes Hydraulikfluid unmittelbar in das drucklose Reservoir 124 zurückfließen kann.

Ebenfalls fluidisch gekoppelt mit dem Anschluss 154 ist ein Drucksensor 158. Der Drucksensor 158 liefert ein Ausgangssignal an die Steuerelektronik 136. Basierend auf diesem Ausgangssignal führt die Steuerelektronik 136 einen Ist-Wert/Soll-Wert-Vergleich durch und generiert basierend auf diesem Vergleich Ansteuersignale für den Elektromotor 136. Auf diese Weise wird eine geschlossene Regelschleife für die Hydraulikdruckerzeugung bei einer Betriebsbremsung oder Systembremsung realisiert.

Die in dem Ausführungsbeispiel gemäß Fig. 1 veranschaulichte Realisierung des Druckerzeugers 116 hat gewisse Vorteile gegenüber der Verwendung anderweitiger Druckerzeuger wie Mehrkolbenpumpen. So kann beispielsweise der bei herkömmlichen Mehrkolbenpumpen typischerweise erforderliche Druckspeicher für Hydraulikfluid entfallen. Des Weiteren entfallen die für Mehrkolbenpumpen typischen Druckpulsationen, da aufgrund der Dimensionierung der Hydraulikkammer 150 eine einzige Hubbewegung des Plunger-Kolbens 152 in der Regel ausreicht, um einen gewünschten Hydraulikdruck abzubauen. Außerdem eignet sich der hier vorgeschlagene Plunger-Ansatz in besonderer Weise für den schnellen Aufbau (in der Größenordnung von 1000 bar/s) eines zentralen Hydraulikdrucks mit sich daran anschließender bremskreisindividueller Hydraulikdruck-Einstellung.

Im Folgenden wird die Funktionsweise der Fahrzeug-Bremsanlage 100 gemäß Fig. 1 sowie das bremskreisindividuelle Einstellen des vom Druckerzeuger 116 zentral erzeugten Hydraulikdrucks mittels der beiden Ventile 136, 140 der Druckeinstelleinrichtung 134 näher beschrieben.

Bei einer elektrohydraulischen Betriebsbremsung ist die Steuerelektronik 136 dazu ausgelegt, ein Ausgangssignal eines dem Bremspedal 128 zugeordneten Weg- oder Kraftsensors (in Fig. 1 nicht dargestellt) auszuwerten. Die Steuerelektronik 136 erzeugt dann in Abhängigkeit von diesem Ausgangssignal Ansteuersignale für den Druckerzeuger 116, damit dieser einen Hydraulikdruck in den Bremskreisen 102, 104 erzeugt. Der von dem Druckerzeuger 116 erzeugte Hydraulikdruck entspricht dabei der vom Fahrer gewünschten und über das Bremspedal 128 mitgeteilten FahrzeugVerzögerung.

Bei einer Betriebsbremsung im regenerativen Modus erfolgt eine Ansteuerung des Druckerzeugers 116 mittels der Steuerelektronik 136 lediglich dann, wenn der Verzögerungswunsch des Fahrers die im Generatorbetrieb erzielbare Fahrzeug-Verzögerung überschreitet (z.B. bei einem plötzlichen Nachtreten des Bremspedals 128 im Rahmen einer bereits vorher eingeleiteten Betriebsbremsung). In diesem Fall generiert die Steuerelektronik 136 Ansteuersignale für den Druckerzeuger 116, welche während des Generatorbetriebs auf das ergänzende Erzeugen eines Hydraulikdrucks an zumindest zwei der Radbremsen 106, 108, 110, 112 (Vorderachse und/oder Hinterachse) gerichtet sind. Ein erster Verzögerungsanteil resultiert daher aus dem Generatorbetrieb, während ein zweiter Verzögerungsanteil auf die Betätigung von zumindest zwei der Radbremsen 106, 108, 110, 112 zurückgeht. Die Steuerelektronik 136 stellt sicher, dass beide Verzögerungsanteile zusammen dem vom Fahrer am Bremspedal 128 angeforderten Verzögerungswert für die Betriebsbremsung entsprechen.

Alternativ zu den beiden oben geschilderten Szenarien kann eine Ansteuerung des Druckerzeugers 116 mittels der Steuerelektronik 136 auch im Fall einer Systembremsung (und damit unabhängig von einer Betätigung des Bremspedals 128) erfolgen. Im Ausführungsbeispiel gemäß Fig. 1 lässt sich mittels der Ventile 138, 140 der Druckeinstelleinrichtung 134 der vom Druckerzeuger 116 zentral erzeugte Hydraulikdruck bremskreisindividuell einstellen. Diese bremskreisindividuelle Hydraulikdruck-Einstellung wird nun näher erläutert.

Zum Aufbau eines Hydraulikdrucks in den Bremskreisen 102, 104 und damit an den Radbremsen 106, 108, 110, 112 wird ein vom Druckerzeuger 116 zentral bereitgestellter Hydraulikdruck unabhängig von der Stellung der Sperrventile 138, 140 - aufgrund der diesen parallel geschalteten und sich bereits bei geringem Druckaufbau öffnenden Rückschlagventile 142, 144 - in beiden Bremskreisen 102, 104 betragsgleich aufgebaut. Zum Druckhalten werden die beiden Ventile 138, 140 jeweils geschlossen, so dass die in den Bremskreisen 102, 104 aufgebauten Hydraulikdrücke nicht entweichen können. Hingegen ist eine Erhöhung dieser Hydraulikdrücke über die Rückschlagventile 142, 144 (für beide Bremskreise 102, 104 betragsgleich) jederzeit möglich. Zu diesem Zweck muss lediglich der vom Druckerzeuger 116 zentral bereitgestellte Hydraulikdruck weiter erhöht werden.

Zum Druckabbau muss der vom Druckerzeuger 116 zentral bereit gestellte Hydraulikdruck wieder reduziert werden. Dabei lassen sich die in den Bremskreisen 102, 104 aufgebauten Hydraulikdrücke bremskreisindividuell reduzieren (und damit also bremskreisindividuell einstellen). Wird zum Beispiel im Rahmen eines Ansaughubs des Druckerzeugers 116 das dem Bremskreis 102 zugeordnete Ventil 138 geöffnet, während das dem Bremskreis 104 zugeordnete Ventil 140 geschlossen bleibt, so wird lediglich der Hydraulikdruck im Bremskreis 102 reduziert, während der Hydraulikdruck im Bremskreis 104 gehalten wird. Es stellt sich folglich eine Hydraulikdruckdifferenz zwischen den beiden Bremskreisen 102, 104 ein.

Im praktischen Betrieb der Fahrzeug-Bremsanlage 100 erfolgt bei einem vom Fahrer und/oder automatisch eingeleiteten Bremseingriff die Einstellung der gewünschten Hydraulikdrücke bzw. Hydraulikdruckverläufe durch eine gezielte zeitliche Abfolge von Druckaufbau-, Druckhalte- und Druckabbauphasen. Hierzu werden der Druckerzeuger 116 sowie die Ventile 138, 140 mittels der Steuerelektronik 136 in geeigneter Weise angesteuert, um erforderlichenfalls eine bremskreisindividuelle Hydraulikdruckeinstellung zu realisieren. Im Ausführungsbeispiel gemäß Fig. 1 resultiert die bremskreisindividuelle Einstellung der Hydraulikdrücke in erster Linie aus der Tatsache, dass im Rahmen von Druckabbauphasen eine Druckdifferenz zwischen den Bremskreisen 102, 104 durch individuelles Öffnen eines der Ventile 138, 140 eingestellt werden kann.

Für eine ABS-Regelung, aber auch zur Unterstützung anderweitiger fahrerunabhängiger Bremseingriffe (z.B. ESP-Regelung, Bremsassistent oder regenerative Bremsung) steht die dritte Ventileinrichtung 132 zur Verfügung. Wie bereits erwähnt, gestattet die dritte Ventileinrichtung 132 in bekannter Weise eine radindividuelle Regelung der Hydraulikdrücke und damit der Bremsdrücke in den Radbremsen 106, 108, 110, 112. Um beispielsweise während einer ABS-Regelung in das drucklose Reservoir 124 abgelassenes Hydraulikfluid wieder in die Bremskreise 102, 104 zu fördern, werden durch Schließen beider Ventile 138, 140 die zugeordneten Bremskreise 102, 104 in eine Druckhaltephase gebracht und der vom Druckerzeuger 116 zentral bereitgestellte Hydraulikdruck so stark reduziert, dass Hydraulikfluid aus dem drucklosen Reservoir 124 über das Rückschlagventil 156 wieder in die Hydraulikkammer 150 des Druckerzeugers 116 nachströmen kann. Anschließend ist es möglich, mittels des Druckerzeugers 116 den aufgrund der geschlossenen Ventile 138, 140 gehaltenen Hydraulikdruck weiter zu erhöhen (durch Überströmen der geschlossenen Ventile 138, 140 über die Rückschlagventile 142, 144).

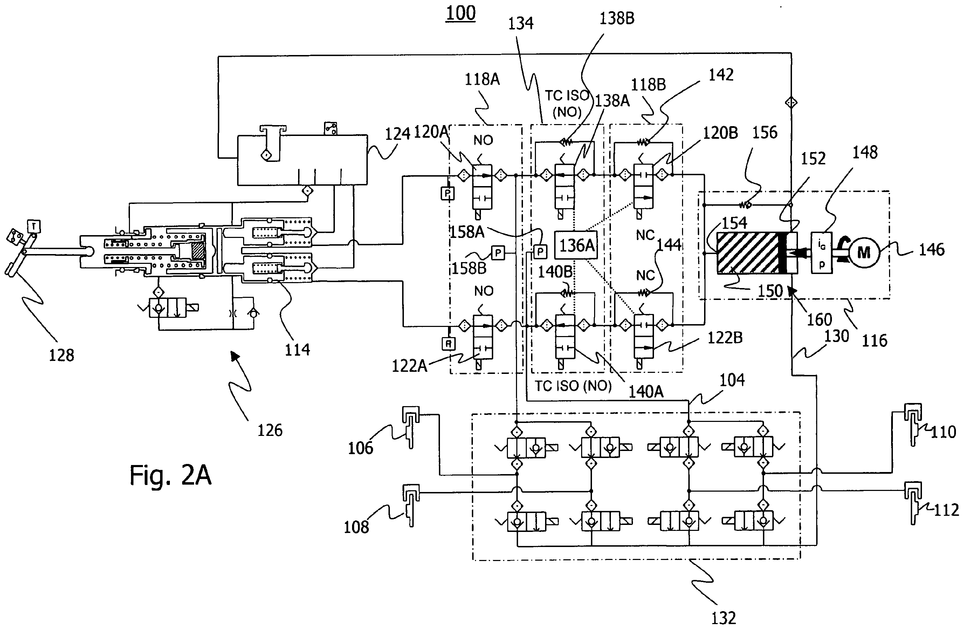

Fig. 2A zeigt ein zweites allgemeines Beispiel einer Fahrzeug-Bremsanlage 100. Die Fahrzeug-Bremsanlage 100 gemäß Fig. 2A stimmt großteils mit der Fahrzeug-Bremsanlage des ersten Ausführungsbeispiels überein. Aus diesem Grund werden im Folgenden lediglich die abweichenden Konstruktionsmerkmale näher erläutert. Die Abweichungen betreffen in erster Linie die Konfiguration der Pedalrückwirkungssimulationseinheit 126, der Umschalteinrichtung 118, sowie der Druckeinstelleinrichtung 134.

Die Pedalrückwirkungssimulationseinheit 126 wurde dahingehend modifiziert, dass die Simulationsfunktionalität nun über ein elektromagnetisch betätigtes 2/2-WegeVentil zu- und abgeschaltet wird. Eine mögliche Realisierung der solchermaßen ausgebildeten Pedalrückwirkungssimulationseinheit 126 ist aus der DE 196 38 102 A1 bekannt. Eine weitere Realisierungsmöglichkeit für die Pedalrückwirkungssimulationseinheit 126 mit außen liegender Simulationsfeder ist in der DE 10 2007 047 208 A1 beschrieben.

Sowohl bei der Ausführungsform der Pedalrückwirkungssimulationseinheit 126 gemäß Fig. 1 als auch bei der entsprechenden Ausführung in Fig. 2A ist der Hauptzylinder 114 im Hinblick auf den Push-Through-Betrieb gemäß einer "Twin"-Anordnung ausgeführt. Dies bedeutet, dass jedem der beiden Bremskreise 102, 104 ein eigener Betätigungskolben zugeordnet ist, wobei die beiden Betätigungskolben parallel zueinander angeordnet sind. Die diesbezüglichen konstruktiven Details des Hauptzylinders 114 lassen sich der DE 10 2005 037 792 A1 entnehmen.

Wie in Fig. 2A gezeigt, umfasst die modifizierte Umschalteinrichtung anstatt der im ersten Ausführungsbeispiel vorgesehenen beiden 3/2-Wege-Ventile 120, 122 nun vier 2/2-Wege-Ventile 120A, 122A, 120B, 122B, die auf zwei Funktionseinheiten 118A, 118B der Umschalteinrichtung aufgeteilt sind. Eine erste Funktionseinheit 118A umfasst pro Bremskreis ein elektrisch betätigbares Sperrventil 120A, 122A, das im elektrisch unbetätigten Zustand geöffnet ist ("NO"). Die zweite Funktionseinheit 118B umfasst pro Bremskreis 102, 104 ein elektrisch betätigbares Sperrventil 120B, 122B, das im elektrisch unbetätigten Zustand geschlossen ist ("Normally Closed" oder "NC"). Die zweite Funktionseinheit 118B umfasst ferner pro Ventil 120B, 122B ein dem Ventil 120B, 122B parallel geschaltetes Rückschlagventil 142, 144. Die Funktionsweise der Rückschlagventile 142, 144 im Hinblick auf ein Überströmen wurde bereits im Zusammenhang mit dem ersten Ausführungsbeispiel erläutert.

Fig. 2A veranschaulicht die Grundstellung der Ventile 120A, 122A, 120B, 122B im elektrisch unbetätigten Zustand. Dieser Zustand entspricht dem "Push-Through"-Betrieb, in dem die Radbremsen 106, 108, 110, 112 fluidisch mit dem Hauptzylinder 114 gekoppelt sind. Zur Kopplung des Druckerzeugers 116 mit den Radbremsen 106, 108, 110, 112 werden die Ventile 120A, 122A, 120B, 122B elektrisch betätigt, wodurch gleichzeitig der Hauptzylinder 114 fluidisch von den Radbremsen 106, 108, 112 abgekoppelt wird.

Zwischen den beiden Funktionseinheiten 118A, 118B ist die modifizierte Druckeinstelleinrichtung 134 vorgesehen. Die Druckeinstelleinrichtung 134 umfasst im allgemeinen Beispiel gemäß Fig. 2A pro Bremskreis 102, 104 ein regelbares 2/2-Wege-Ventil 138A, 140A. Die Druckeinstelleinrichtung 134 umfasst ferner eine Steuerelektronik 136A zur Ansteuerung der beiden Regelventile 138A, 140A mittels Pulsweitenmodulation. Der Betätigungszustand der beiden Ventile 138A, 140A ist somit individuell über die Pulsweite der dem jeweiligen Ventil 138A, 140A zugeführten Ansteuersignale kontinuierlich zwischen einer vollständig geöffneten Ventilstellung und einer vollständig geschlossenen Ventilstellung einstellbar.

Jedem Ventil 138A, 140A ist ein Rückschlagventil 138B, 140B parallel geschaltet. Die Kombination aus Rückschlagventil 138B, 140B einerseits und Regelventil 138A, 140A andererseits ermöglicht eine Druckdifferenz-basierte bremskreisindividuelle Hydraulikdruck-Einstellung, wie in der DE 102 47 651 A1 näher beschrieben. Der Offenbarungsgehalt der DE 102 47 651 A1 im Hinblick auf den Aufbau und die Funktionsweise der Regelventile 138A, 140A wird hiermit durch Inbezugnahme aufgenommen.

Der maßgebliche Unterschied zwischen dem Ausführungsbeispiel der Figur 1 und dem allgemeinen Bespiel der Figur 2A betrifft die Hydraulikdruckregelung. Im Ausführungsbeispiel gemäß Fig. 1 erfolgt eine präzise geregelte Ansteuerung des Elektromotors 146 auf der Grundlage eines Ist-Wert/Soll-Wert-Vergleichs unter Verwendung eines vom Drucksensor 158 bereitgestellten Signals. Der Drucksensor 158 ist dabei dem Druckerzeuger 116 unmittelbar nachgeschaltet. Mittels der Einstelleinrichtung 134 erfolgt dann eine bremskreisindividuelle Hydraulikdruck-Einstellung im Rahmen von Druckabbauphasen.

In dem allgemeinen Beispiel gemäß Fig. 2A wird hingegen ein anderweitiges Regelkonzept verfolgt. Hier werden zur bremskreisindividuellen Hydraulikdruckregelung den beiden Regelventilen 138A, 140A bremskreisindividuell Ansteuersignale zugeführt. Die Steuerelektronik 136A erzeugt diese Steuersignale basierend auf einem Ist-Wert/Soll-Wert-Vergleich unter Berücksichtigung von Ausgangssignalen von den Ventilen 138A, 140A nachgeschalteten Drucksensoren 158A, 158B.

Im Gegensatz zum Ausführungsbeispiel gemäß Fig. 1 ermöglicht das allgemeine Beispiel gemäß Fig. 2A eine bremskreisindividuelle Hydraulikdruck-Einstellung auch im Rahmen einer Druckaufbauphase. So kann beispielsweise beim Aufbauen eines zentralen Hydraulikdrucks mittels des Druckerzeugers 116 auch unabhängig von der Stellung der Ventile 138, 140 das dem Bremskreis 102 zugeordnete Ventil 120B geöffnet und das dem Bremskreis 104 zugeordnete Ventil 122B geschlossen werden. In einem solchen Schaltzustand der Ventile 120B, 122B wird damit nur der Hydraulikdruck im Bremskreis 102 erhöht, während der Hydraulikdruck im Bremskreis 104 gehalten wird. Demgemäss können die Ventile 120B, 122B funktional der Druckeinstelleinrichtung 134 zugeordnet und von der Steuerelektronik 136A angesteuert werden.

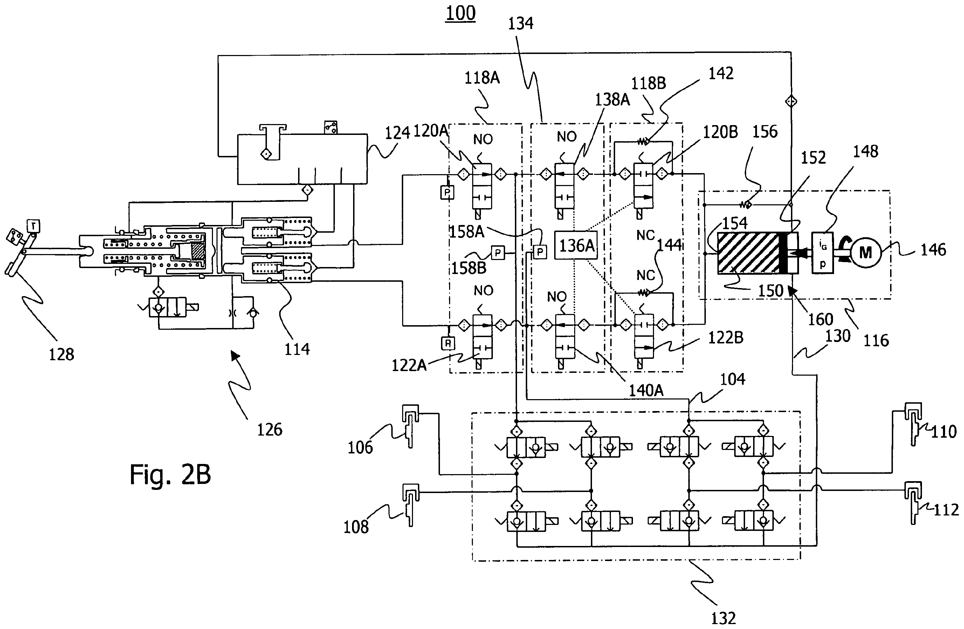

Fig. 2B veranschaulicht ein weiteres allgemeines Beispiel einer Fahrzeug-Bremsanlage 100. Die Fahrzeug-Bremsanlage 100 gemäß Fig. 2B stimmt großteils mit der Fahrzeug-Bremsanlage des zweiten Ausführungsbeispiels überein. Der maßgebliche Unterschied zur Fahrzeug-Bremsanlage des zweiten Ausführungsbeispiels besteht darin, dass die Ventile 138A, 140A nicht mehr auf einer druckdifferenzbasierten Grundlage angesteuert werden. Die Rückschlagventile 138B, 140B wurden daher fortgelassen.

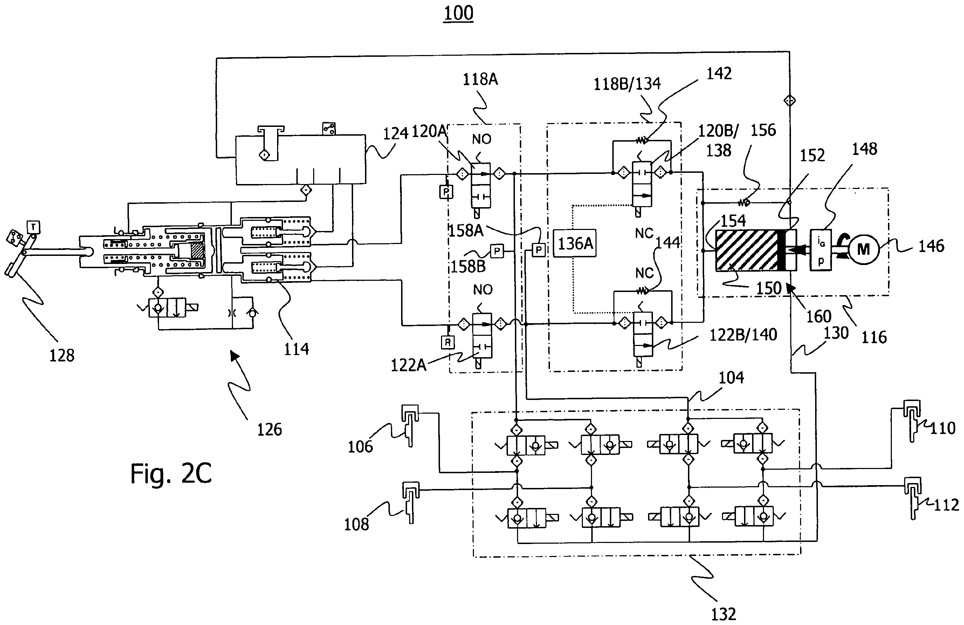

Fig. 2C zeigt ein viertes lediglich allgemeines Beispiel einer Fahrzeug-Bremsanlage 100. Die Fahrzeug-Bremsanlage 100 gemäß Fig. 2C stimmt großteils mit der Fahrzeug-Bremsanlage des zweiten Ausführungsbeispiels überein. Der wesentliche Unterschied betrifft die Tatsache, dass die beiden Sperrventile 138A, 140A mit den zugeordneten Rückschlagventilen 138B, 140B fortgelassen wurden. Funktional übernehmen die Ventile 120B, 122B damit die Aufgabe der Ventile 138, 140 (mit zugeordneten Rückschlagventilen 142, 144) von Fig. 1. Gegenüber dem allgemeinen Beispiel gemäß Fig. 2B wurde daher auf die Möglichkeit, auch im Rahmen einer Druckaufbauphase eine Druckdifferenz zwischen den Bremskreisen 102, 104 einstellen zu können, verzichtet.

Bei dem Ausführungsbeispiel gemäß Fig. 1 müssen aus Sicherheitsgründen die 3/2-Wege-Ventile 120, 122 der Umschalteinrichtung 118 so ausgelegt sein, dass in ihrer elektrisch unbetätigten, ausschließlich mechanisch (durch Federkraft) bestimmten Stellung eine Verbindung des Hauptzylinders 114 zu den Bremskreisen 102, 104 besteht und eine Verbindung zum Druckerzeuger 116 und den beiden 2/2-WegeVentilen 138, 140 gesperrt ist. Daher können die 2/2-Wege-Ventile 138, 140 sowohl als in unbetätigtem Zustand geschlossene (NC) als auch als in unbetätigtem Zustand geöffnete (NO) Ventile ausgelegt werden. Bei dem allgemeinen Beispiel gemäß Fig. 2A müssen aus Sicherheitsgründen die beiden 2/2-Wege-Ventile 120A, 122A, über die eine Verbindung zum Hauptzylinder 114 hergestellt wird, als im unbetätigtem Zustand geöffnete (NO) Ventile ausgelegt werden. Ferner muss mindestens eines der beiden hintereinander geschalteten 2/2-Wege-Ventile 138, 120B, 140, 122B als in unbetätigtem Zustand geschlossenes (NC) Ventil ausgelegt werden, damit die Verbindung zum Druckerzeuger 116 gesperrt ist. Gleiches gilt für das Ausführungsbeispiel gemäß 2B, und entsprechend müssen beim allgemeinen Beispiel gemäß Fig. 2C die beiden 2/2-Wege-Ventile 120A, 122A als in unbetätigtem Zustand geöffnete (NO) Ventile und die beiden anderen 2/2-Wege-Ventile 120B/138, 122B/140 als in unbetätigtem Zustand geschlossene (NC) Ventile ausgelegt werden.

Wie bereits erwähnt, erfolgt die Einstellung der gewünschten Hydraulikdrücke bzw. Hydraulikdruckverläufe durch eine gezielte zeitliche Abfolge von Druckaufbau-, Druckhalte- und Druckabbauphasen, die mittels gezielter Ansteuerung des Druckerzeugers 116 und der jeweiligen Ventile 120B, 122B, 138, 140, 142, 144 der Druckeinstelleinrichtung 134 realisiert werden. Grundsätzlich ist die bremskreisindividuelle Hydraulikdruck-Einstellung mittels "einfacher" Ventile, die lediglich zwei definierte Schaltstellungen aufweisen, machbar. Dies setzt voraus, dass ein verhältnismäßig genau einstellbarer zentraler Druckerzeuger 116 eingesetzt wird. Um nun aus Gründen des Aufwands und damit einhergehender Kosten einen Kompromiss zu finden, können präzise regelbare - und damit technisch aufwändigere - Ventile eingesetzt werden, die beispielsweise proportional und/oder über eine Druckdifferenz (vgl. Fig. 2A) regelbar sind. Im Gegenzug können mechanische Komponenten des Druckerzeugers 116, wie beispielsweise der Motor 146 und/oder das Getriebe 148, einfacher - und damit preiswerter - ausgelegt werden.

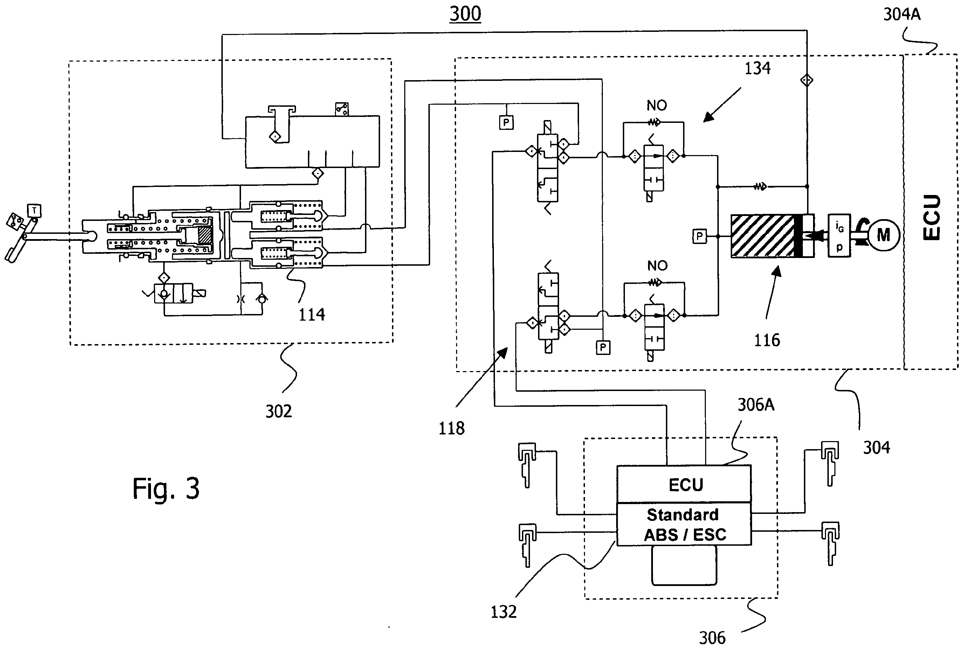

Nun werden unter Bezugnahme auf die Fign. 3 bis 6 verschiedene modulare Konzepte für eine Hydraulikbaugruppe erläutert. Die Hydraulikbaugruppe ist für eine Fahrzeug-Bremsanlage gemäß dem in Fig. 1 dargestellten ersten Ausführungsbeispiel vorgesehen, wobei zur Untermauerung der Modularität die in dem allgemeinen Beispiel gemäß Fig. 2A vorgestellte Einheit aus Hauptzylinder 114 und Pedalrückwirkungssimulationseinheit 126 verwendet wird. Der Übersichtlichkeit halber wurden in den Fign. 3 bis 6 nicht alle Bezugszeichen übernommen und die Steuerelektronik 136 fortgelassen.

In den folgenden Ausführungsbeispielen werden die einzelnen Komponenten der Fahrzeug-Bremsanlage in unterschiedlicher Weise auf verschiedene Unterbaugruppen verteilt. Von jeder der Unterbaugruppen können verschiedene Typen existieren, die sich hinsichtlich der Auslegung der einzelnen Komponenten voneinander entscheiden. Gemäß dem Baukastenprinzip kann dann in einem ersten Schritt von jeder Unterbaugruppe der erforderliche Typ ausgewählt werden. In einem nächsten Schritt werden die ausgewählten Typen zur Hydraulikbaugruppe zusammengesetzt. Die Hydraulikbaugruppe wird dann als Ganzes im Fahrzeug montiert.

Ein erstes Ausführungsbeispiel für den modularen Aufbau einer Hydraulikbaugruppe 300 ist in Fig. 3 dargestellt. Die Hydraulikbaugruppe 300 umfasst drei Unterbaugruppen 302, 304, 306. Eine erste Unterbaugruppe 302 umfasst den Hauptzylinder 114 mit zugeordneter Pedalrückwirkungssimulationseinheit. Eine zweite Unterbaugruppe 304 umfasst den Druckerzeuger 116, die Umschalteinrichtung 118 sowie die Druckeinstelleinrichtung 134. Die zweite Unterbaugruppe 304 umfasst ferner ein Steuergerät ("Electronic Control Unit" oder "ECU"), welche alle für die Ansteuerung des Druckerzeugers 116, der Umschalteinrichtung 118 und der Druckeinstellereinrichtung 134 erforderlichen Elektronikkomponenten (wie beispielsweise die Steuerelektronik 136 gemäß Fig. 1) umfasst. Eine dritte Unterbaugruppe 106 beinhaltet die Ventileinrichtung 132 sowie ein Standard-Steuergerät 306A zur Ansteuerung der Ventileinrichtung 132.

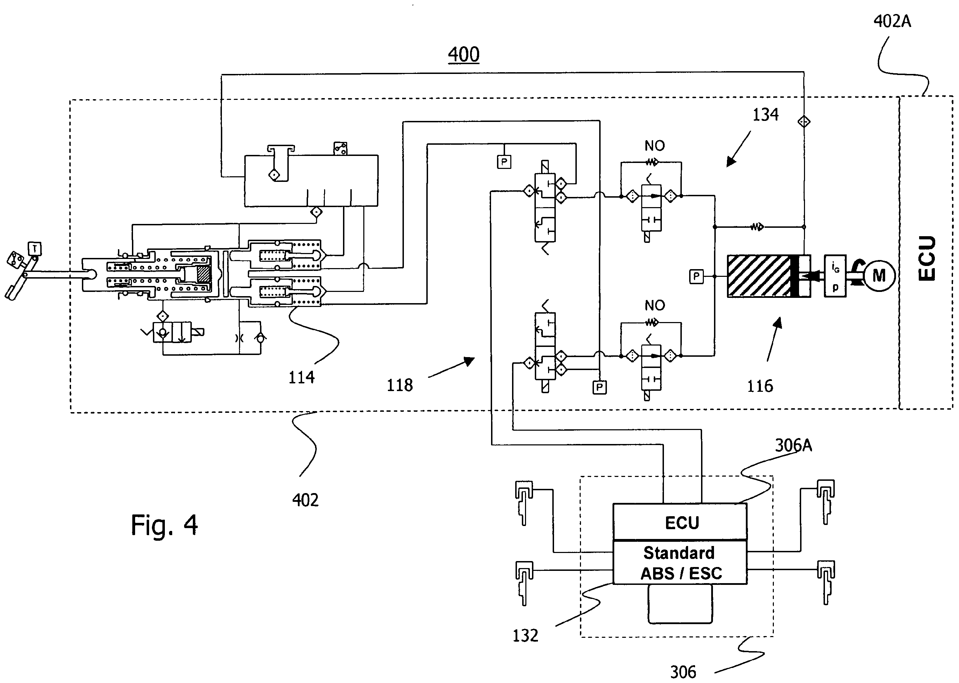

Fig. 4 veranschaulicht ein weiteres lediglich der allgemeinen Verdeutlichung dienendes Beispiel für den modularen Aufbau einer Hydraulikbaugruppe 400. Gegenüber dem Ausführungsbeispiel von Fig. 3 wurden die beiden Unterbaugruppe 302, 304 zu einer einzigen Unterbaugruppe 402 zusammengefasst. Ein der Unterbaugruppe 402 zugeordnetes Steuergerät 402A entspricht funktional großteils dem Steuergerät 304A gemäß Fig. 3. Eine zweite Unterbaugruppe 306 stimmt mit der entsprechenden Unterbaugruppe aus Fig. 3 überein.

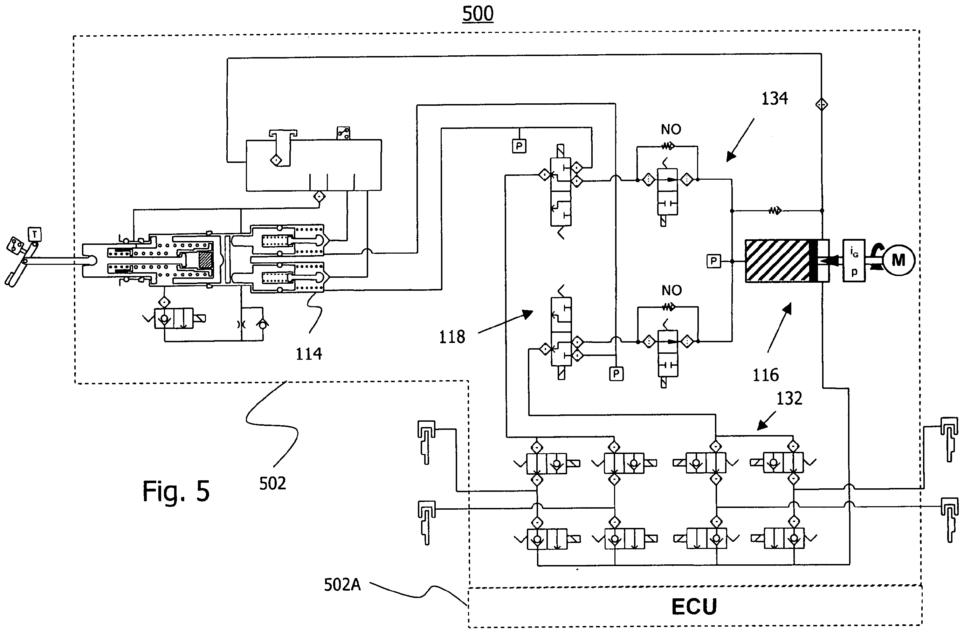

Fig. 5 zeigt ein drittes lediglich allgemeines Beispiel für den modularen Aufbau einer Hydraulikbaugruppe 500. Gemäß Fig. 5 ist die Hydraulikbaugruppe 500 in Gestalt einer einzigen Unterbaugruppe 502 realisiert. Die Unterbaugruppe 502 umfasst ein Steuergerät 502A, welches die notwendigen elektronischen Komponenten zur Ansteuerung des Druckerzeugers 116, der Umschalteinrichtung 118, der Ventileinrichtung 132 sowie der Druckeinstelleinrichtung 134 umfasst.

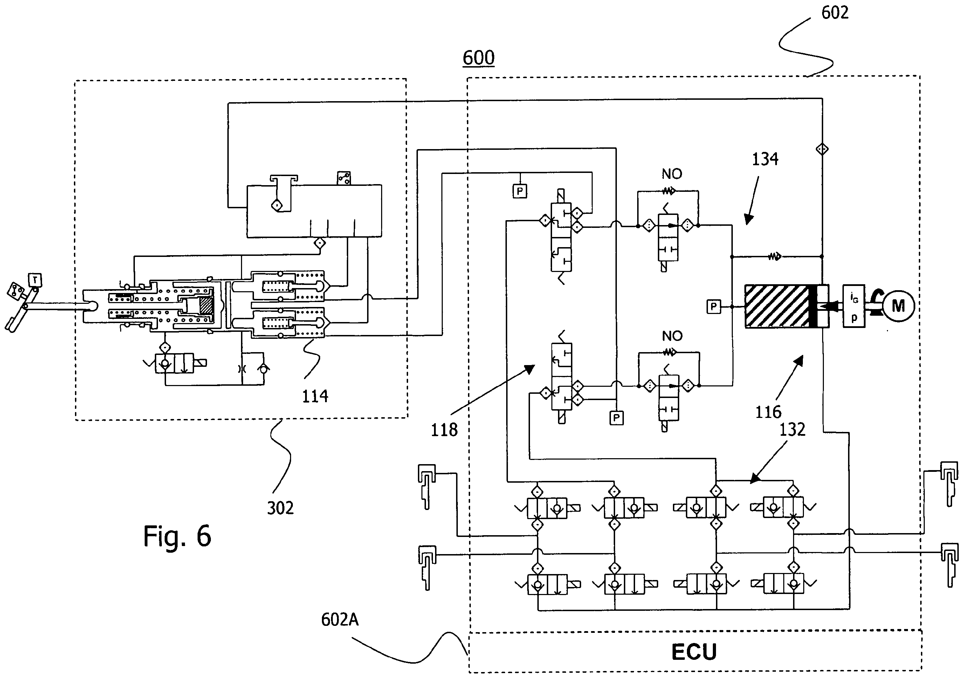

Fig. 6 zeigt ein viertes Ausführungsbeispiel für den modularen Aufbau einer Hydraulikbaugruppe 600. Die Hydraulikbaugruppe 600 gemäß Fig. 6 umfasst eine erste Baugruppe 302, welche mit der entsprechenden Baugruppe aus Fig. 3 übereinstimmt. Eine zweite Baugruppe 602 beinhaltet den Druckerzeuger 116, die Umschalteinrichtung 118, die Ventileinrichtung 132 sowie die Druckeinstelleinrichtung 134. Die Unterbaugruppe 602 umfasst ferner ein Steuergerät 602A zur elektrischen Ansteuerung der einzelnen Komponenten der Unterbaugruppe 602.

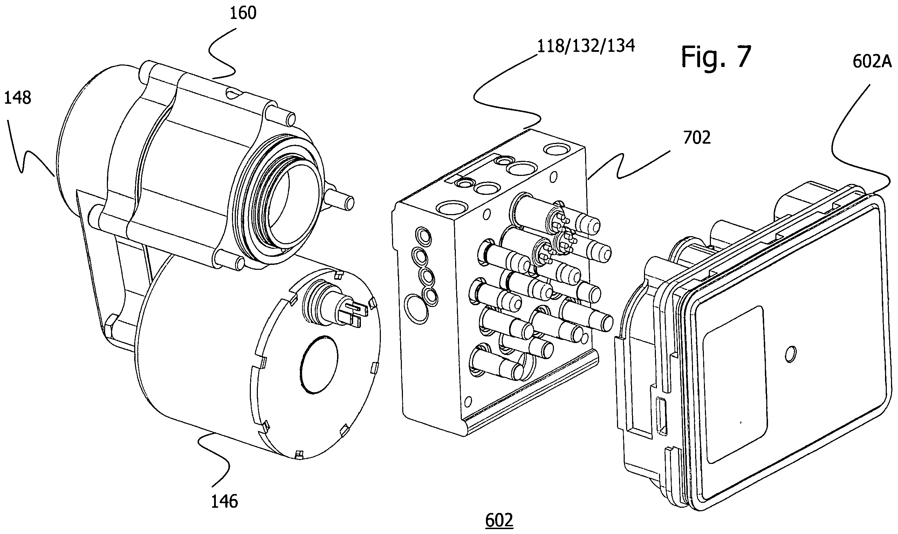

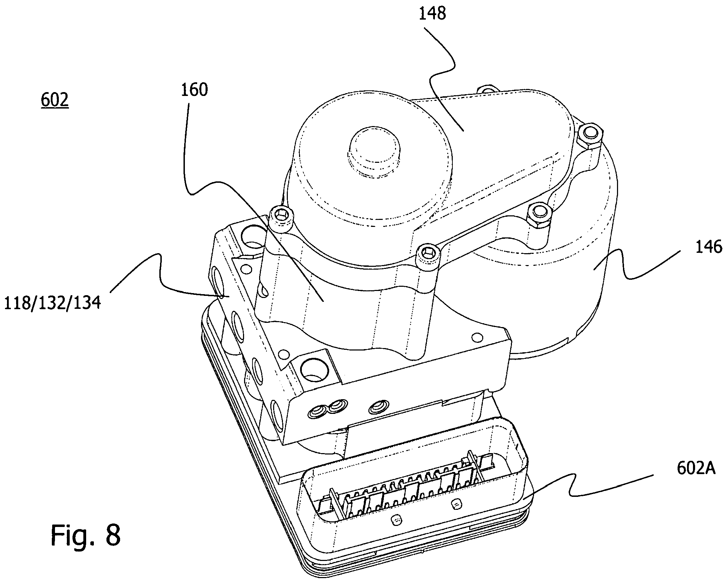

Fig. 7 zeigt eine Explosionsdarstellung der Unterbaugruppe 602 gemäß Fig. 6., und Fig. 8 zeigt die Unterbaugruppe 602 in fertig montiertem Zustand. Wie diesen beiden Figuren entnommen werden kann, bildet der Elektromotor 146 zusammen mit dem Getriebe 148 und dem Zylinder/Kolben-System 160 eine erste Montageeinheit. Eine zweite Montageeinheit wird von einem Gehäuseblock 702 gebildet, welcher die Ventile und Drucksensoren der Umschalteinrichtung 118, der Ventileinrichtung 132 sowie der Druckeinstelleinrichtung 134 aufnimmt. Die Ventile und Drucksensoren stehen in Fig. 7 nach rechts über den Gehäuseblock 702 hervor, um von dem Steuergerät 602A kontaktiert zu werden. Zu diesem Zweck wird das Steuergerät 602A auf den Gehäuseblock 702 aufgesetzt. Innerhalb des Gehäuseblocks 702 sind die in Fig. 6 illustrierten Fluidleitungen ausgebildet.

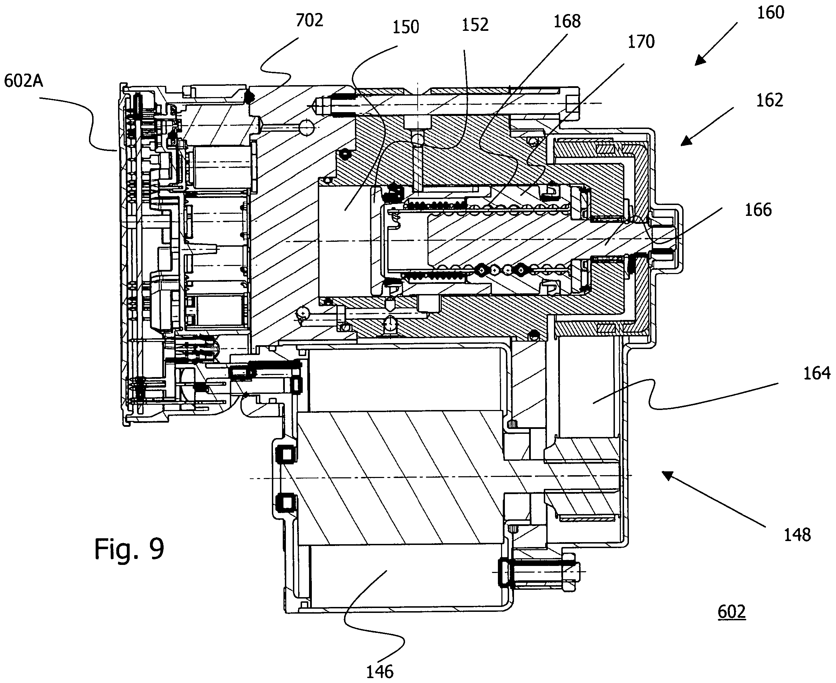

Fig. 9 ist eine Schnittansicht der Unterbaugruppe 602 gemäß den Fign. 7 und 8. Deutlich zu erkennen sind der Elektromotor 146, das abtriebsseitig mit dem Elektromotor gekoppelte Getriebe 148 (in Form eines Riemengetriebes) sowie eine vom Getriebe 148 betätigte Mutter/Spindel-Anordnung 162. Die Mutter/Spindel-Anordnung 162 umfasst eine von einem Riemen 164 des Getriebes 148 angetriebene Spindel 166. Die Spindel 166 ist über Lagerkugeln 168 mit einer Mutter 170 der Mutter/Spindel-Anordnung 162 gekoppelt. Eine Drehbewegung der Spindel 166 bewirkt in Abhängigkeit des Drehsinns eine translatorische Bewegung der Mutter 170 in Fig. 9 entweder nach links oder rechts.

Die Mutter 170 ist starr mit dem in der Hydraulikkammer 150 fluiddicht geführten Kolben 152 gekoppelt. Eine Translationsbewegung der Mutter 170 bewirkt somit unmittelbar eine Hubbewegung des Plunger-Kolbens 152 in der Hydraulikkammer 150. Bei einem Ansaughub wird der Plunger-Kolben 152 in Fig. 9 nach rechts bewegt, während bei einem Ausstoßhub der Plunger-Kolben 152 nach links bewegt wird.

In der Schnittansicht gemäß Fig. 9 nicht sichtbar ist der kombinierte Ansaug-/Ausstoßanschluss 154. Dieser ist auf der dem Plunger-Kolben 152 zugewandten Stirnseite des Gehäuseblocks 702 vorgesehen. In Fig. 9 hingegen deutlich zu erkennen ist der Sachverhalt, dass der Elektromotor 146 achsparallel zum Plunger-Kolben 152 angeordnet ist. Diese Anordnung gestattet die Realisierung einer kompakten Baugröße für die Unterbaugruppe 602.

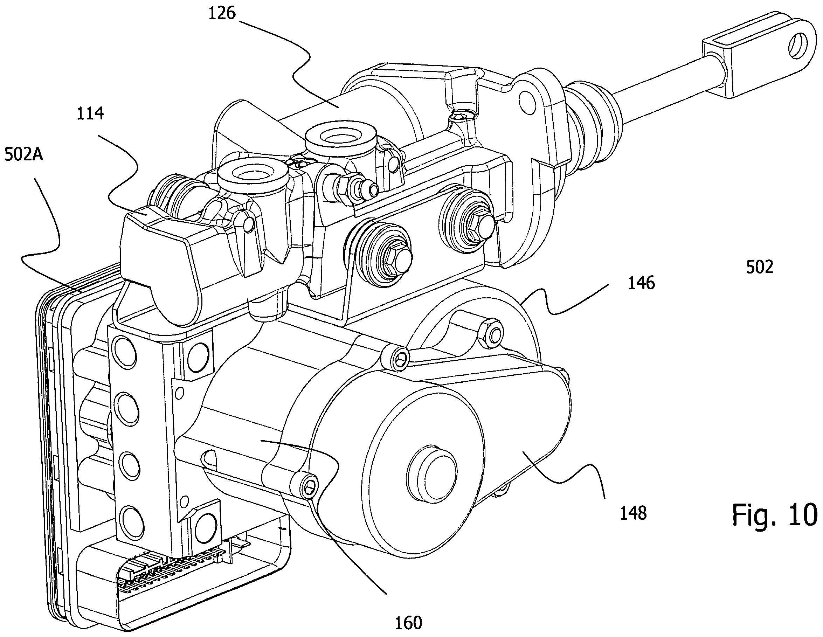

Fig. 10 zeigt eine perspektivische Ansicht der Unterbaugruppe 502 des modularen Konzepts gemäß Fig. 5. Die Unterbaugruppe 502 umfasst zusätzlich zu den bereits im Zusammenhang mit den Fign. 7 und 8 erläuterten Montageeinheiten einen Hauptzylinder 114 sowie eine Pedalrückwirkungssimulationseinheit 126 (das drucklose Reservoir ist in Fig. 9 nicht dargestellt, da es nicht notwendigerweise Teil der Unterbaugruppe ist).

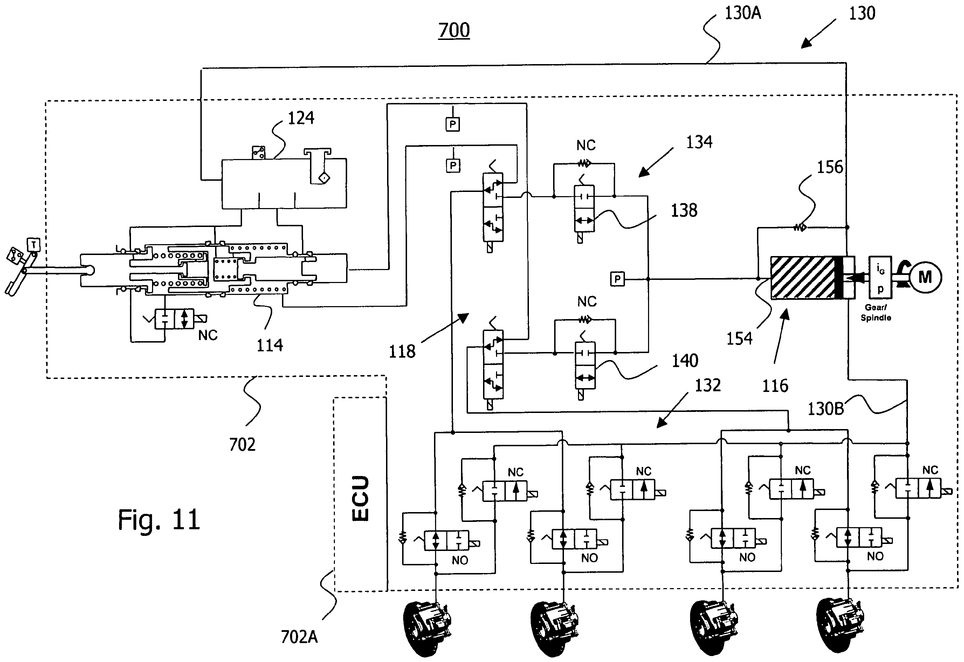

Fig. 11 zeigt ein weiteres Ausführungsbeispiel einer Fahrzeug-Bremsanlage 700. Die Fahrzeug-Bremsanlage 700 gemäß Fig. 11 stimmt großteils mit der Fahrzeug-Bremsanlage des ersten Ausführungsbeispiels gemäß Fig. 1 überein. So umfasst auch die Fahrzeug-Bremsanlage 700 einen fahrerbetätigbaren Hauptzylinder 114, einen Druckerzeuger 116 zum fahrerunabhängigen (d.h. in erster Linie fußkraftunabhängigen) Erzeugen eines Hydraulikdrucks in den Bremskreisen, eine Umschalteinrichtung 118, eine Ventileinrichtung 132 zur fahrerunabhängigen Durchführung von Bremseingriffen sowie eine Druckeinstelleinrichtung 134 (mit einer der Steuerelektronik 136 gemäß Fig. 1 vergleichbaren Steuereinrichtung) mit den oben erläuterten Funktionalitäten.

Die Fluidleitung 130 ist ebenfalls wie im Zusammenhang mit dem ersten Ausführungsbeispiel geschildert ausgebildet. Dabei ist die Fluidleitung in Fig. 11 in einen ersten Abschnitt 130A und einen zweiten Abschnitt 136B unterteilt. Der erste Abschnitt 130A verzweigt, ausgehend vom drucklosen Hydraulikfluid-Reservoir 124, einerseits über das Rückschlagventil 156 in Richtung des Hydraulikanschlusses 154 des Druckerzeugers 116 und andererseits über den zweiten Teil 130B der Fluidleitung in Richtung der Ventileinrichtung 132 zur fahrerunabhängigen Durchführung von Bremseingriffen. Der zweite Teil 130B dient als Hydraulikfluid-Rücklaufleitung von der Ventileinrichtung 132 in das Reservoir 124, während dem ersten Teil 130A der Leitung 130 sowohl eine Rücklauf- als auch eine Ansaug-Funktionalität zukommt.

Abweichend von der Realisierung gemäß der in Fig. 1 dargestellten Ausführungsform sind die Ventile 138, 140 der Druckstelleinrichtung 134 als in unbetätigtem Zustand geschlossene Ventile ("Normally Closed" oder "NC") ausgebildet. Ferner wurden der Aufbau des (ebenfalls mit einem Pedalrückwirkungssimulator versehenen) Hauptzylinders 114 sowie dessen Ventilbeschaltung geringfügig geändert.

In modularer Hinsicht umfasst die Fahrzeug-Bremsanlage 700 gemäß Fig. 11 eine einzige Hydraulikbaugruppe 702, die als kompakte Einheit ausgebildet ist. Die für die Ansteuerung der einzelnen Komponenten erforderlichen Elektronikkomponenten sind in einem einzigen Steuergerät 702A zusammengefasst.

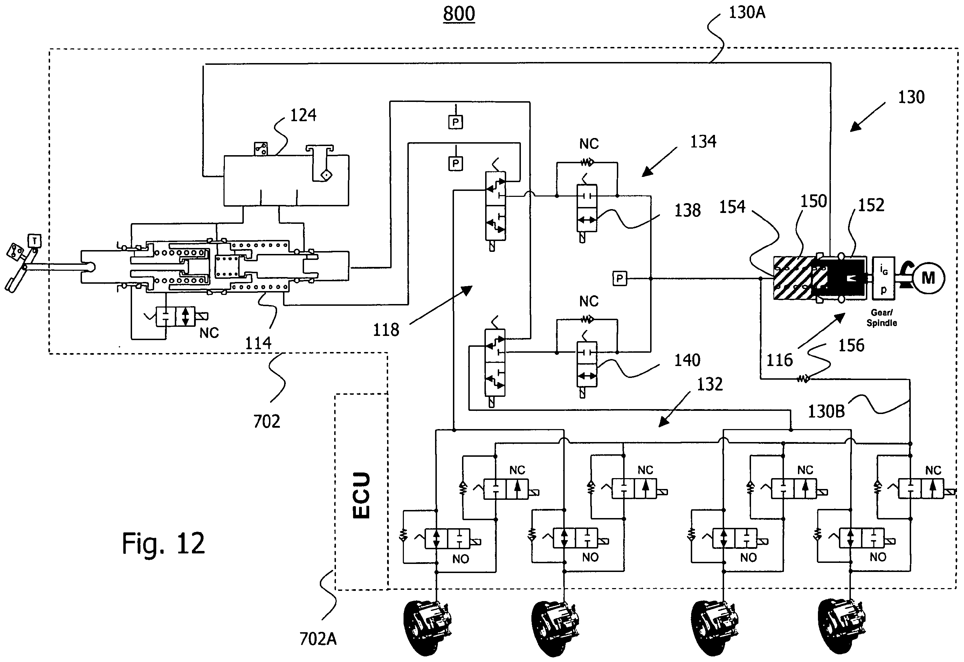

Fig. 12 zeigt ein weiteres Ausführungsbeispiel einer Fahrzeug-Bremsanlage 800, welche großteils mit der Fahrzeug-Bremsanlage 700 gemäß Fig. 11 übereinstimmt. Aus diesem Grund werden im Folgenden lediglich die abweichenden Konstruktionsmerkmale näher erläutert.

Die Abweichungen zwischen den Ausführungsbeispielen gemäß Fig. 11 einerseits und Fig. 12 auf der anderen Seite betreffen hauptsächlich die Ausgestaltung des Druckerzeugers 116 sowie der Hydraulikleitung 130. Wie in Fig. 12 veranschaulicht, ist die der Ventileinrichtung 132 zugeordnete Hydraulikfluid-Rücklaufleitung 130B strömungsabwärts über das Rückschlagventil 156 mit dem Hydraulikanschluss 154 des Druckerzeugers 116 gekoppelt. Auf diese Weise lässt sich bei einem über die Ventileinrichtung 132 gesteuerten Hydraulikfluid-Ablass ("Dump") aus den Radbremsen das zurückströmende Hydraulikfluid (bei entsprechender Ventilstellung der Umschalteinrichtung 118 sowie der Druckeinstelleinrichtung 134) in die Hydraulikkammer 150 des Druckerzeugers 116 fördern, ohne dass bei einem Fördervorgang Hydraulikfluiid über die Rücklaufleitung 130B zu den Radbremsen gelangen kann.

Der Druckerzeuger 116 weist also eine Fluidaufnahmefunktionalität für durch die Rücklaufleitung 130B zurück strömendes Hydraulikfluid auf. Zu diesem Zweck kann der Kolben 152 in Fig. 12 nach rechts bewegt werden, um das Volumen der Hydraulikkammer 150 zur Aufnahme des über die Rücklaufleitung 130B zurück strömenden Hydraulikfluids aufzunehmen.

Wie in Fig. 12 veranschaulicht, ist die Hydraulikfluid-Rücklaufleitung 130B von dem drucklosen Hydraulikfluid-Reservoir 124 fluidisch stets abgetrennt. Es kann jedoch Hydraulikfluid über die Ansaugleitung 130A vom Reservoir 124 im Fall eines Förderhubs des Kolbens 152 in die Hydraulikkammer 150 gelangen. Somit kann die Hydraulikkammer 150 sowohl mit Hydraulikfluid aus dem Reservoir 24 (nämlich über die Hydraulikleitung 130A) als auch aus den Radbremsen (nämlich über die Hydraulikleitung 130B) befüllt werden.

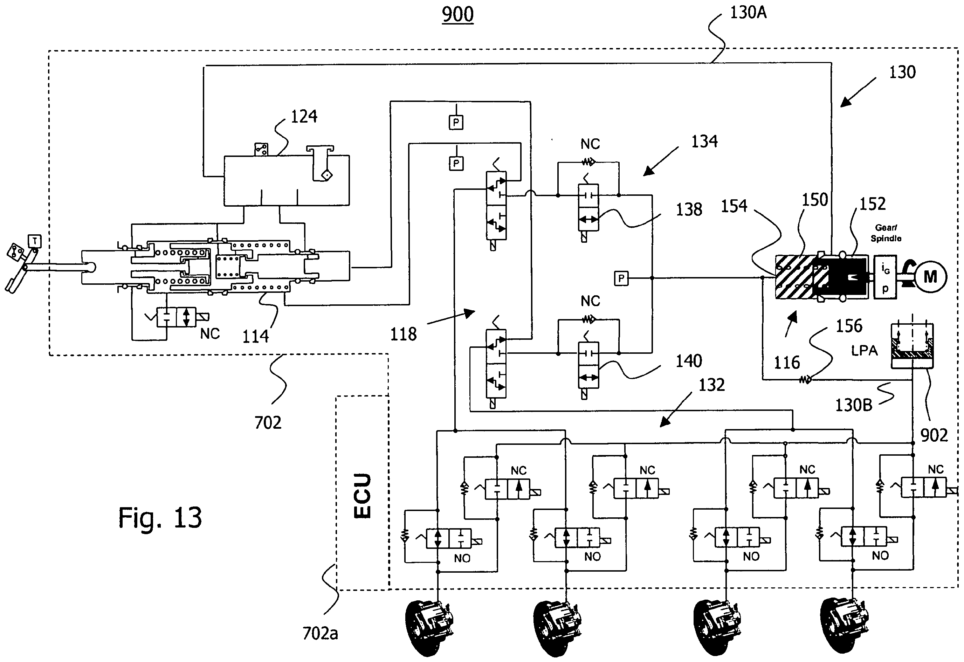

Fig. 13 zeigt ein weiteres Ausführungsbeispiel einer Fahrzeug-Bremsanlage 900, welche im Wesentlichen mit der Fahrzeug-Bremsanlage 800 gemäß Fig. 12 übereinstimmt. Die Bremsanlage 900 umfasst zusätzlich einen Niederdruckspeicher (LPA) 902 in der Rücklaufleitung 130B. Der Druckspeicher 902 ist zwischen der Ventileinrichtung 132 und dem Rückschlagventil 156 in die Rücklaufleitung 130B eingefügt. Aufgabe des Druckspeichers 902 ist es, das aus den Radbremsen abfließendes Hydraulikfluid zwischenzuspeichern, bis es im Rahmen eines Ansaughubs des Kolbens 152 in die Hydraulikkammer 150 des Druckerzeugers 116 gelangen kann.

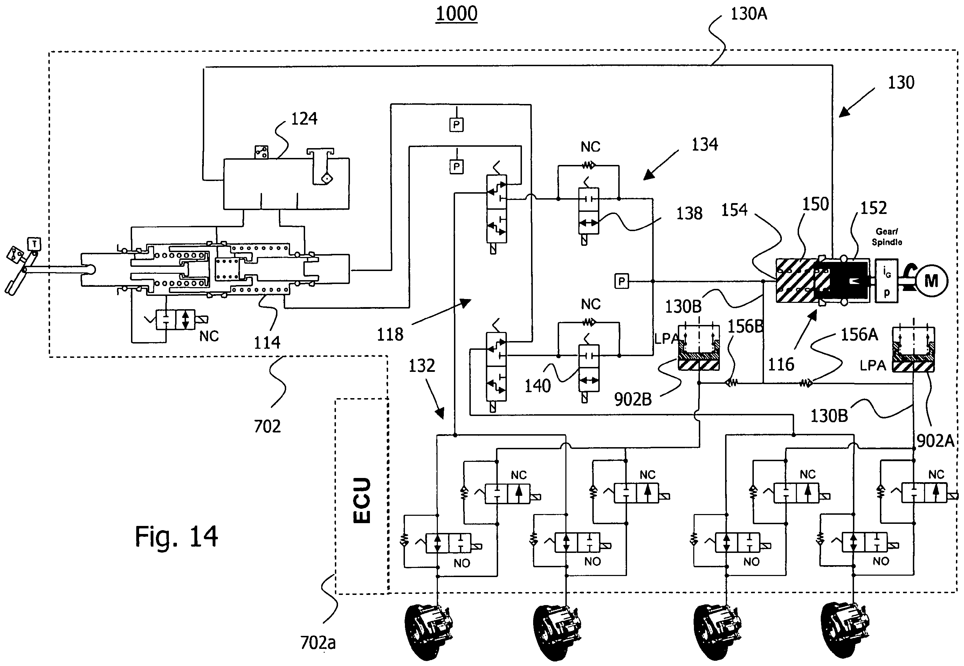

Bei dem in Fig. 14 gezeigten Ausführungsbeispiel einer Fahrzeug-Bremsanlage 1000 sind zwei Niederdruckspeicher 902A, 902B in der Rücklaufleitung 130B zwischen der Ventileinrichtung 132 und dem Druckerzeuger 116 vorgesehen. Genauer gesagt ist pro Bremskreis ein separater Druckspeicher 902A, 902B vorhanden. Ferner ist pro Druckspeicher 902A, 902B ein separates Rückschlagventil 156A, 156B in der Rücklaufleitung 130B vorgesehen.

Bei den in den Fign. 12 bis 14 gezeigten Ausführungsformen wird das aus den Radbremsen abgelassene Hydraulikfluid nicht in das drucklose Hydraulikfluid-Reservoir 24 gefördert, sondern in die Hydraulikkammer 150 des Druckerzeugers 116. Der entsprechende Fördervorgang kann direkt (Fig. 12) oder indirekt über einen oder mehrere Niederdruckspeicher (Fign. 13 und 14) erfolgen. Diese Ausgestaltung hat den Vorteil, dass das vom Druckerzeuger 116 geförderte Hydraulikfluid (jedenfalls nicht mehr vollständig und immer) zunächst aus dem Reservoir 124 angesaugt werden muss, so dass sich die Druckaufbauphasen verkürzen.

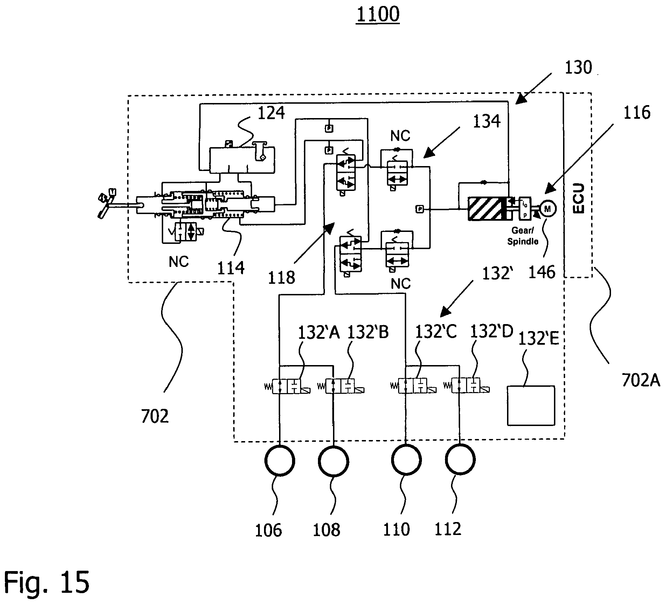

Ein weiteres Ausführungsbeispiel einer Fahrzeug-Bremsanlage 1100 ist in Fig. 15 gezeigt. Die Fahrzeug-Bremsanlage 1100 stimmt teilweise mit der Fahrzeug-Bremsanlage 100 gemäß Fig. 1 bzw. 700 gemäß Fig. 11 überein. Abweichend von den dortigen Fahrzeug-Bremsanlagen 100, 700 ist die Ventileinrichtung 132 zur fahrerunabhängigen Durchführung von Bremseingriffen an den Radbremsen durch eine Ventileinrichtung 132' zur radindividuellen oder radgruppenindividuellen Bremseindruckeinstellung im Multiplexbetrieb ersetzt. Die Ventileinrichtung 132' kann zur Bremsdruckeinstellung sowohl bei einer Betriebsbremsung als auch im Rahmen einer Systembremsung herangezogen werden.

Die Ventileinrichtung 132' ist zwischen der Druckeinstelleinrichtung 134 und den Radbremsen 106, 108, 110, 112 angeordnet und umfasst pro Radbremse 106, 108, 110, 112 genau ein Ventil 132'A, 132'B, 132'C, 132'D. Ferner ist eine Steuerelektronik 132'E vorgesehen, welche eine Ansteuerung der Ventile 132'A, 132'B, 132'C, 132'D im Multiplex-Betrieb gestattet. Zur radindividuellen oder radgruppenindividuellen Druckeinstellung ist der Elektromotor 146 als hochdynamischer Aktuator ausgebildet.

Der Multiplex-Betrieb ist allgemein in der WO 2006/111393 A1 und in der nachveröffentlichten WO 2010/091883 beschrieben. Aus diesem Grund wird nachfolgend lediglich ein exemplarisches Beispiel dieses Betriebsmodus erläutert, wobei davon ausgegangen wird, dass an den Hinterradbremsen 106, 108 gruppenweise ein Bremsdruck von 30 bar und an Vorderradbremsen 110, 112 gruppenweise ein Bremsdruck von 50 bar einzustellen ist. Dabei sind im Vorfeld des Druckaufbaus die Ventile der Umschalteinrichtung 118 sowie der Druckeinstelleinrichtung 134 derart geschaltet, dass mittels des Druckerzeugs 116 ein Bremsdruck an den Radbremsen 106, 108, 110, 112 aufgebaut werden kann.

Zu Beginn der Druckaufbauphase sind sämtliche Ventile der Ventileinrichtung 132' geöffnet. Bei Erreichen des ersten Zieldrucks von 30 bar schließen zunächst die den Radbremsen 106, 108 der Hinterräder zugeordneten Ventile 132'A, 132'B, wobei der Druck weiterhin ansteigt. Sobald der Druckanstieg einen Wert von 50 bar (zweiter Zieldruck) erreicht hat, werden auch die Ventile 132'C, 132'D geschlossen, welche den Radbremsen 110, 112 der Vorderräder zugeordnet sind. Der zum Zeitpunkt des Schließens des jeweiligen Ventils 132'A, 132'B, 132'C, 132'D an der jeweiligen Radbremse 106, 108, 110, 112 vorherrschende Hydraulikdruck bleibt solange aufrecht erhalten ("eingesperrt") bis es wieder geöffnet wird. Im Anschluss an das Öffnen kann ein weiterer Druckaufbau oder aber ein Druckabbau erfolgen.

Zusätzlich zur radindividuellen oder radgruppenindividuellen Bremsdruckeinstellung mittels der Ventileinrichtung 132' im Multiplexbetrieb bleibt die Möglichkeit einer bremskreisindividuellen Druckeinstellung mittels der Druckeinstelleinrichtung 134 aufrecht erhalten. Von dieser Möglichkeit kann beispielsweise im Rahmen eines regenerativen Bremsbetriebs Gebrauch gemacht werden. So kann es gewünscht sein, die Radbremsen einer Fahrzeugachse (erster Bremskreis) für den Generatorbetrieb vollständig von dem Druckerzeuger 116 abzukoppeln, während an den Radbremsen einer anderen Fahrzeugachse (zweiter Bremskreis) mittels des Druckerzeugers 116 Bremsdruck aufgebaut werden soll. Zu diesem Zweck kann das dem ersten Bremskreis zugeordnete Ventil der Druckeinstelleinrichtung 134 geschlossen und das dem zweiten Bremskreis zugeordnete Ventil geöffnet werden.

Wie sich aus der exemplarischen Beschreibung der Ausführungsbeispiele und der weiteren allgemeinen Beispiele ergibt, resultiert aus der Kombination einer zentralen Hydraulikdruck-Erzeugung mit einer nachfolgenden bremskreisindividuellen Hydraulikdruck-Einstellung eine Mehrzahl signifikanter Vorteile. Weitere Vorteile ergeben sich aus den unterschiedlichen Ausprägungen des optionalen Baukastenprinzips, gemäß dem die Hydraulikbaugruppe in unterschiedliche Unterbaugruppen aufgeteilt wird. Selbstverständlich sind die oben erläuterten Aufteilungen der Hydraulikbaugruppe in einzelne Unterbaugruppen lediglich beispielhaft. Mit anderen Worten können auch abweichende Aufteilungen vorgenommen werden.

Weitere Vorteile ergeben sich aus der selektiven Kopplung eines Fluideingangs des Druckerzeugers mit den Radbremsen zugeordneten Fluidauslässen. Ferner lassen sich die hier vorgestellten Ausführungsbeispiele mit einer radindividuellen Bremsdruckeinstellung im Multiplexbetrieb kombinieren.

## Patentansprüche

1. Hydraulikbaugruppe für eine Fahrzeug-Bremsanlage (100) mit wenigstens zwei Bremskreisen (102, 104) und den Bremskreisen (102, 104) zugeordneten Radbremsen (106, 108, 110, 112), wobei die Hydraulikbaugruppe Folgendes umfasst:
einen Druckerzeuger (116) zur fahrerunabhängigen Erzeugung eines zentralen Hydraulikdrucks für die Bremskreise (102, 104) zumindest bei einer von einem Fahrer eingeleiteten Betriebsbremsung; und
wenigstens eine Druckeinstelleinrichtung (134) zur bremskreisindividuellen Einstellung des vom Druckerzeuger (116) fahrerunabhängig erzeugten zentralen Hydraulikdrucks, wobei die Druckeinstelleinrichtung (134) je Bremskreis (102, 104) eine erste Ventileinrichtung (138, 140) umfasst mit:
wenigstens einem Einstellventil (138, 140), das zumindest zwischen einer geöffneten Ventilstellung und einer geschlossenen Ventilstellung einstellbar ist, um einen Hydraulikdruck bremskreisindividuell einzustellen;
einem dem Einstellventil (138, 140) derart parallel geschalteten ersten federkraftbeaufschlagten Rückschlagventil (142, 144), dass in der geschlossenen Ventilstellung ein Überströmen des Einstellventils in Richtung der Radbremsen (106, 108, 110, 112) ermöglicht ist, um den aufgrund des geschlossenen Einstellventils (138, 140) gehaltenen Hydraulikdruck weiter zu erhöhen,
**dadurch gekennzeichnet, dass** die Hydraulikbaugruppe ferner eine Umschalteinrichtung (118) zur wahlweisen Kopplung der Radbremsen (106, 108, 110, 112) mit entweder dem fahrerunabhängig erzeugten Hydraulikdruck oder einem von einem Fahrer erzeugten Hydraulikdruck umfasst, wobei die Umschalteinrichtung (118) pro Bremskreis (102, 104) ein 3/2-WegeVentil (120, 122) umfasst.

2. Hydraulikbaugruppe nach Anspruch 1, wobei die erste Ventileinrichtung (138, 140) elektrisch betätigbar ist, um einen dem Betätigungszustand entsprechenden Hydraulikdruck einzustellen, wobei optional die erste Ventileinrichtung mittels Pulsweitenmodulation elektrisch betätigbar ist, wobei der Betätigungszustand über die Pulsweite einstellbar ist.

3. Hydraulikbaugruppe nach einem der vorhergehenden Ansprüche, wobei der Druckerzeuger (116) einen Ansauganschluss (154) für Hydraulikfluid und einen Ausstoßanschluss (154) für Hydraulikfluid umfasst, wobei optional der Ansauganschluss (154) und der Ausstoßanschluss (154) mit einander fluidisch gekoppelt oder koppelbar sind, wobei eine zweite Ventileinrichtung (156) in einer Ansaugleitung (130) vorgesehen ist, die in den Ansauganschluss (154) mündet, wobei optional die zweite Ventileinrichtung ein zweites Rückschlagventil (156) umfasst, welches bei einem Ansaugen von Hydraulikfluid durch den Druckerzeuger (116) öffnet und bei einem Ausstoßen von Hydraulikfluid durch den Druckerzeuger (116) schließt.

4. Hydraulikbaugruppe nach Anspruch 3, wobei der Ansauganschluss (154) mit einem drucklosen Hydraulikfluid-Reservoir (124) gekoppelt oder koppelbar ist.

5. Hydraulikbaugruppe nach einem der vorhergehenden Ansprüche, wobei der Druckerzeuger (116) eine Hydraulikkammer (150) zur Aufnahme von Hydraulikfluid und einen innerhalb der Hydraulikammer beweglichen Plunger-Kolben (152) zur fahrerunabhängigen Erzeugung des zentralen Hydraulikdrucks umfasst, wobei die Bremskreise (102, 104) aus der Hydraulikkammer (150) mit Hydraulikfluid versorgbar sind.

6. Hydraulikbaugruppe nach Anspruch 5, ferner umfassend einen Elektromotor (146) zur Betätigung des Plunger-Kolbens (152), wobei vorzugsweise die Druckeinstelleinrichtung (134) ein erstes Steuergerät (136) für den Elektromotor (146) umfasst, wobei optional der Elektromotor (146) achsparallel zum Plunger-Kolben (152) angeordnet ist, wobei vorzugsweise zwischen dem der Elektromotor (146) und dem Druckerzeuger (116) ein Getriebe (148) vorgesehen ist.

7. Hydraulikbaugruppe nach einem der vorhergehenden Ansprüche, wobei die Umschalteinrichtung (118) elektrisch betätigbar ist und in einem unbetätigten Zustand die Radbremsen (106, 108, 110, 112) mit einem fahrerbetätigbaren Hauptzylinder (114) koppelt sowie in einem betätigten Zustand die Radbremsen (106, 108, 110, 112) mit dem Druckerzeuger (116) koppelt.

8. Hydraulikbaugruppe nach einem der vorangehenden Ansprüche, wobei zumindest die Umschalteinrichtung (118), die Druckeinstelleinrichtung (134) und der Druckerzeuger (116) eine eigenständig handhabbare erste Unterbaugruppe (304, 402, 502, 602, 702) bilden.

9. Hydraulikbaugruppe nach einem der vorhergehenden Ansprüche, ferner umfassend eine dritte Ventileinrichtung (132) zur fahrerunabhängigen Durchführung von Bremseingriffen an den Radbremsen (106, 108, 110, 112), wobei die dritte Ventileinrichtung (132) in den Bremskreisen zwischen der Druckeinstelleinrichtung (134) und den Radbremsen (106, 108, 110, 112) angeordnet ist.

10. Hydraulikbaugruppe nach Anspruch 8 und 9, wobei die dritte Ventileinrichtung (132) Teil der ersten Unterbaugruppe (502, 602, 72) ist.

11. Hydraulikbaugruppe nach einem der Ansprüche 9 oder 10, wobei die dritte Ventileinrichtung (132) ausschließlich nicht-regelbare Sperrventile umfasst.

12. Hydraulikbaugruppe nach einem der Ansprüche 1 bis 8, ferner umfassend eine dritte Ventileinrichtung (132') zur radindividuellen oder radgruppenindividuellen Bremsdruckeinstellung im Multiplexbetrieb, wobei die dritte Ventileinrichtung (132') zwischen der Druckeinstelleinrichtung (134) und den Radbremsen (106, 108, 110, 112) angeordnet ist, wobei vorzugsweise die dritte Ventileinrichtung pro Radbremse (106, 108, 110, 112) genau ein Ventil (132'A, 132'B, 132'C, 132'D) umfasst.

13. Hydraulikbaugruppe nach einem der Ansprüche 9 bis 12, wobei der Druckerzeuger (116) mit wenigstens einer der dritten Ventileinrichtung (132) zugeordneten Hydraulikfluid-Rücklaufleitung (130B) gekoppelt oder koppelbar ist und eine Fluidaufnahmefunktionalität für durch die Hydraulikfluid-Rücklaufleitung (130B) zurück strömendes Hydraulikfluid aufweist.

14. Hydraulikbaugruppe nach Anspruch 13 in Kombination mit Anspruch 3, wobei die zweite Ventileinrichtung (156) in der Hydraulikfluid-Rücklaufleitung (130B) angeordnet ist, wobei vorzugsweise die Hydraulikfluid-Rücklaufleitung (130B) von einem drucklosen Hydraulikfluid-Reservoir (124) fluidisch abgetrennt ist.

15. Hydraulikbaugruppe nach Anspruch 13 oder 14, ferner umfassend wenigstens einen Druckspeicher (902; 902A; 902B), der mit der Hydraulikfluid-Rücklaufleitung (130B) gekoppelt oder koppelbar ist und dazu ausgebildet ist, durch die Hydraulikfluid-Rücklaufleitung (130B) zurück gefördertes Hydraulikfluid zu speichern, wobei optional der wenigstens eine Druckspeicher (902; 902A; 902B) in der Hydraulikfluid-Rücklaufleitung (130B) zwischen dem Druckerzeuger (116) und der dritten Ventileinrichtung (132) vorgesehen ist.

16. Hydraulikbaugruppe nach einem der vorhergehenden Ansprüche, ferner umfassend ein zweites Steuergerät (306A, 502A, 602A) zur fahrerunabhängigen Durchführung von Bremseingriffen an den Radbremsen (106, 108, 110, 112), wobei das zweite Steuergerät (306A, 502A, 602A) dazu ausgelegt ist, den Druckerzeuger (116) anzusteuern, um fahrerunabhängig einen Bremsdruck aufzubauen.

17. Elektrohydraulische Fahrzeug-Bremsanlage (100), umfassend die Hydraulikbaugruppe nach einem der vorhergehenden Ansprüche.

## Claims

1. Hydraulic assembly for a vehicle brake system (100) comprising at least two brake circuits (102, 104) and wheel brakes (106, 108, 110, 112) associated with the brake circuits (102, 104), the hydraulic assembly comprising:
a pressure generator (116) for generating a central hydraulic pressure for the brake circuits (102, 104) independently of a driver at least during a service braking operation initiated by a driver; and
at least one pressure adjuster (134) for adjusting for each individual brake circuit the central hydraulic pressure generated by the pressure generator (116) independently of the driver, wherein the pressure adjuster (134) comprises for each brake circuit (102, 104) a first valve device (138, 140) with:
at least one adjusting valve (138, 140), which is adjustable at least between an open valve position and a closed valve position to adjust for each individual brake circuit the central hydraulic pressure;
a first spring force biased non-return valve (142, 144), which is connected in parallel to the adjusting valve (138, 140) in a way that in the closed valve position enables an overflow of the adjusting valve in the direction of the wheel brakes (106, 108, 110, 112) to further increase the hydraulic pressure held by the closed adjusting valve (138, 140),
**characterised in that** the hydraulic assembly further comprises a changeover device (118) for selectively coupling the wheel brakes (106, 108, 110, 112) to either the hydraulic pressure generated independently of a driver or a hydraulic pressure generated by a driver, wherein the changeover device (118) comprises one 3/2-way valve (120, 122) per brake circuit (102, 104).

2. Hydraulic assembly according to claim 1, wherein the first valve device (138, 140) is electrically actuable in order to adjust a hydraulic pressure corresponding to an actuating state, wherein, as an option, the first valve device is electrically actuable by means of pulse width modulation, wherein the actuating state is adjustable by means of the pulse width.

3. Hydraulic assembly according to any of the preceding claims, wherein the pressure generator (116) comprises an inlet port (154) for hydraulic fluid and an outlet port (154) for hydraulic fluid, wherein, as an option, the inlet port (154) and the outlet port (154) are configured to be fluidically coupled or coupleable to one another, wherein a second valve device (156) is provided in an intake line (130), which opens out into the inlet port (130), wherein, as an option, the second valve device comprises a second non-return valve (156), which opens in the event of an intake of hydraulic fluid by the pressure generator (116) and closes in the event of a discharge of hydraulic fluid by the pressure generator (116).

4. Hydraulic assembly according to claim 3, wherein the inlet port (154) is configured to be coupled or coupleable to an unpressurized hydraulic fluid reservoir (124).

5. Hydraulic assembly according to any of the preceding claims, wherein the pressure generator (116) comprises a hydraulic chamber (150) for receiving hydraulic fluid as well as a plunger piston (152) movable within the hydraulic chamber for generating the central hydraulic pressure independently of the driver, wherein the brake circuits (102, 104) are configured to be supplied with hydraulic fluid from the hydraulic chamber (150).

6. Hydraulic assembly according to claim 5, further comprising an electric motor (146) for actuating the plunger piston (152), wherein preferably the pressure adjuster (134) comprises a first control unit (136) for the electric motor (146), wherein, as an option, the electric motor (146) is disposed paraxially relative to the plunger piston (152), wherein preferably a gear (148) is provided between the electric motor (146) and the pressure generator (116).

7. Hydraulic assembly according to any of the preceding claims, wherein the changeover device (118) is electrically actuable and in a non-actuated state couples the wheel brakes (106, 108, 110, 112) to a driver-actuable master cylinder (114) and in an actuated state couples the wheel brakes (106, 108, 110, 112) to the pressure generator (116).

8. Hydraulic assembly according to any one of the preceding claims, wherein at least the changeover device (118), the pressure adjuster (134) and the pressure generator (116) form an independently manipulable first subassembly (304, 402, 502, 602, 702).

9. Hydraulic assembly according to any one of the preceding claims, further comprising a third valve device (132) for carrying out braking interventions at the wheel brakes (106, 108, 110, 112) independently of the driver, wherein the third valve device (132) is disposed in the brake circuits between the pressure adjuster (134) and the wheel brakes (106, 108, 110, 112).

10. Hydraulic assembly according to claim 8 and 9, wherein the third valve device (132) is part of the first subassembly (502, 602, 702).

11. Hydraulic assembly according to any one of the claims 9 or 10, wherein the third valve (132) device comprises exclusively non-controllable shut-off valves.

12. Hydraulic assembly according to any one of the claims 1 to 8, further comprising a third valve device (132') for adjusting the brake pressure for each individual wheel or wheel group in multiplex mode, wherein the third valve device (132') is disposed between the pressure adjuster (134) and the wheel brakes (106, 108, 110, 112), wherein preferably the third valve device comprises precisely one valve (132'A, 132'B, 132'C, 132'D) per wheel brake (106, 108, 110, 112).

13. Hydraulic assembly according to any one of the claims 9 to 12, wherein the pressure generator (116) is configured to be coupled or coupleable to at least one hydraulic fluid return line (130B) associated with the third valve device (132) and has a fluid-receiving functionality for hydraulic fluid flowing back through the hydraulic fluid return line (130B).

14. Hydraulic assembly according to claim 13 in combination with claim 3, wherein the second valve device (156) is disposed in the hydraulic fluid return line (130B), wherein preferably the hydraulic fluid return line (130B) is fluidically disconnected from an unpressurized hydraulic fluid reservoir (124).

15. Hydraulic assembly according to claim 13 or 14, further comprising at least one pressure accumulator (902; 902A; 902B), which is configured to be coupled or coupleable to the hydraulic fluid return line (130B) and is configured to store hydraulic fluid fed back through the hydraulic fluid return line (130B), wherein, as an option, the at least one pressure accumulator (902; 902A; 902B) is provided in the hydraulic fluid return line (130B) between the pressure generator (116) and the third valve device (132).

16. Hydraulic assembly according to any one of the preceding claims, further comprising a second control unit (306A, 502A, 602A) for carrying out braking interventions at the wheel brakes (106, 108, 110, 112) independently of the driver, wherein the second control unit (306A, 502A, 602A) is designed to trigger the pressure generator (116) in order to build up a brake pressure independently of the driver.

17. Electrohydraulic vehicle brake system (100) comprising the hydraulic assembly according to any one of the preceding claims.

## Revendications

1. Module hydraulique pour un système de freinage de véhicule (100) comportant au moins deux circuits de freinage (102, 104) et des freins de roue (106, 108, 110, 112) associés aux circuits de freinage (102, 104), lequel module hydraulique comprenant :
un générateur de pression (116) pour générer une pression hydraulique centrale pour les circuits de freinage (102, 104) indépendamment du conducteur, au moins lors d'un freinage de service initié par un conducteur ; et
au moins un dispositif de réglage de pression (134) pour régler, individuellement par circuit de freinage, la pression hydraulique centrale générée par le générateur de pression (116) indépendamment du conducteur, lequel dispositif de réglage de pression (134) comprenant, par circuit de freinage (102, 104), un premier dispositif à soupapes (138, 140) comportant :
au moins une soupape de réglage (138, 140) qui est réglable au moins entre une position de soupape ouverte et une position de soupape fermée pour régler une pression hydraulique individuellement par circuit de freinage ;
un premier clapet antiretour (142, 144) sollicité par ressort, monté en parallèle sur la soupape de réglage (138, 140) de telle sorte que, dans la position de soupape fermée, un écoulement de la soupape de réglage en direction des freins de roue (106, 108, 110, 112) soit possible pour augmenter encore la pression hydraulique maintenue en raison de la soupape de réglage (138, 140) fermée,
**caractérisé en ce que** le module hydraulique comprend en outre un dispositif de commutation (118) pour coupler au choix les freins de roue (106, 108, 110, 112) soit à la pression hydraulique générée indépendamment du conducteur, soit à une pression hydraulique générée par un conducteur, le dispositif de commutation (118) comprenant un distributeur 3/2 (120, 122) par circuit de freinage (102, 104).

2. Module hydraulique selon la revendication 1, dans lequel le premier dispositif à soupapes (138, 140) peut être actionné électriquement pour régler une pression hydraulique correspondant à l'état d'actionnement, le premier dispositif à soupapes pouvant, en option, être actionné électriquement par modulation de largeur d'impulsion, l'état d'actionnement étant réglable par la largeur d'impulsion.

3. Module hydraulique selon l'une des revendications précédentes, dans lequel le générateur de pression (116) comprend un raccord d'aspiration (154) pour du fluide hydraulique et un raccord de décharge (154) pour du fluide hydraulique, dans lequel, en option, le raccord d'aspiration (154) et le raccord de décharge (154) sont ou peuvent être couplés entre eux fluidiquement, dans lequel un deuxième dispositif à soupapes (156) est prévu dans une conduite d'aspiration (130) qui débouche dans le raccord d'aspiration (154), dans lequel, en option, le deuxième dispositif à soupapes comprend un deuxième clapet antiretour (156) qui s'ouvre lors d'une aspiration de fluide hydraulique par le générateur de pression (116) et se ferme lors d'une décharge de fluide hydraulique par le générateur de pression (116).

4. Module hydraulique selon la revendication 3, dans lequel le raccord d'aspiration (154) est ou peut être couplé à un réservoir de fluide hydraulique hors pression (124).

5. Module hydraulique selon l'une des revendications précédentes, dans lequel le générateur de pression (116) comprend une chambre hydraulique (150) destinée à recevoir du fluide hydraulique et un piston plongeur (152) mobile à l'intérieur de la chambre hydraulique pour générer la pression hydraulique centrale indépendamment du conducteur, les circuits de freinage (102, 104) pouvant être alimentés en fluide hydraulique à partir de la chambre hydraulique (150).

6. Module hydraulique selon la revendication 5, comprenant en outre un moteur électrique (146) pour actionner le piston plongeur (152), dans lequel, de préférence, le dispositif de réglage de pression (134) comprend un premier appareil de commande (136) pour le moteur électrique (146), dans lequel, en option, le moteur électrique (146) est disposé parallèlement à l'axe du piston plongeur (152), dans lequel, de préférence, une transmission (148) est prévue entre le moteur électrique (146) et le générateur de pression (116).

7. Module hydraulique selon l'une des revendications précédentes, dans lequel le dispositif de commutation (118) peut être actionné électriquement et couple, dans un état non actionné, les freins de roue (106, 108, 110, 112) à un maître-cylindre (114) actionnable par le conducteur et, dans un état actionné, les freins de roue (106, 108, 110, 112) au générateur de pression (116).

8. Module hydraulique selon l'une des revendications précédentes, dans lequel au moins le dispositif de commutation (118), le dispositif de réglage de pression (134) et le générateur de pression (116) forment un premier sous-ensemble (304, 402, 502, 602, 702) manipulable séparément.

9. Module hydraulique selon l'une des revendications précédentes, comprenant en outre un troisième dispositif à soupapes (132) pour effectuer des interventions de freinage sur les freins de roue (106, 108, 110, 112) indépendamment du conducteur, dans lequel le troisième dispositif à soupapes (132) est disposé dans les circuits de freinage entre le dispositif de réglage de pression (134) et les freins de roue (106, 108, 110, 112).

10. Module hydraulique selon les revendications 8 et 9, dans lequel le troisième dispositif à soupapes (132) fait partie du premier sous-ensemble (502, 602, 72).

11. Module hydraulique selon l'une des revendications 9 ou 10, dans lequel le troisième dispositif à soupapes (132) comprend uniquement des soupapes d'arrêt non réglables.

12. Module hydraulique selon l'une des revendications 1 à 8, comprenant en outre un troisième dispositif à soupapes (132') pour régler la pression de freinage individuellement par roue ou par groupe de roues en mode multiplex, dans lequel le troisième dispositif à soupapes (132') est disposé entre le dispositif de réglage de pression (134) et les freins de roue (106, 108, 110, 112), dans lequel, de préférence, le troisième dispositif à soupapes comprend exactement une soupape (132'A, 132'B, 132'C, 132'D) par frein de roue (106, 108, 110, 112).

13. Module hydraulique selon l'une des revendications 9 à 12, dans lequel le générateur de pression (116) est ou peut être couplé à au moins une conduite de retour de fluide hydraulique (130B) associée au troisième dispositif à soupapes (132) et présente une fonctionnalité de réception de fluide pour du fluide hydraulique en retour à travers la conduite de retour de fluide hydraulique (130B).

14. Module hydraulique selon la revendication 13 en combinaison avec la revendication 3, dans lequel le deuxième dispositif à soupapes (156) est disposé dans la conduite de retour de fluide hydraulique (130B), dans lequel, de préférence, la conduite de retour de fluide hydraulique (130B) est séparée fluidiquement d'un réservoir de fluide hydraulique hors pression (124).

15. Module hydraulique selon la revendication 13 ou 14, comprenant en outre au moins un accumulateur de pression (902 ; 902A ; 902B) qui est ou peut être couplé à la conduite de retour de fluide hydraulique (130B) et est conçu pour stocker du fluide hydraulique ramené à travers la conduite de retour de fluide hydraulique (130B), dans lequel, en option, ledit au moins un accumulateur de pression (902 ; 902A ; 902B) est prévu dans la conduite de retour de fluide hydraulique (130B) entre le générateur de pression (116) et le troisième dispositif à soupapes (132).

16. Module hydraulique selon l'une des revendications précédentes, comprenant en outre un deuxième appareil de commande (306A, 502A, 602A) pour effectuer des interventions de freinage sur les freins de roue (106, 108, 110, 112) indépendamment du conducteur, dans lequel le deuxième appareil de commande (306A, 502A, 602A) est conçu pour commander le générateur de pression (116) afin d'établir une pression de freinage indépendamment du conducteur.

17. Système de freinage électrohydraulique de véhicule (100), comprenant le module hydraulique selon l'une des revendications précédentes.
